(19) Europäisches Patentamt
European Patent Office
Office européen des brevets

(11) **EP 2 068 271 A2**

(12) **EUROPEAN PATENT APPLICATION**

(43) Date of publication:
**10.06.2009 Bulletin 2009/24**

(51) Int Cl.:
**G06K 9/00** (2006.01)  **G06K 9/62** (2006.01)

(21) Application number: **08253672.3**

(22) Date of filing: **10.11.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **07.12.2007 JP 2007316636**

(71) Applicant: **Sony Corporation**
**Tokyo (JP)**

(72) Inventors:
• **Yokono, Jun**
  **Tokyo (JP)**
• **Hasegawa, Yuichi**
  **Tokyo (JP)**

(74) Representative: **Merryweather, Colin Henry**
**J.A. Kemp & Co.**
**14 South Square**
**Gray's Inn**
**London WC1R 5JJ (GB)**

(54) **Detection of an object in an image**

(57)     A learning apparatus includes: first feature quantity calculating means for pairing a predetermined pixel and a different pixel in each of a plurality of learning images, which includes a learning image containing a target object to be recognized and a learning image not containing the target object, and calculating a first feature quantity of the pair by calculating a texture distance between an area including the predetermined pixel and an area including the different pixel; and first discriminator generating means for generating a first discriminator for detecting the target object from an image by a statistical learning using a plurality of the first feature quantities.

*FIG. 1*

**Description**

CROSS-REFERENCES TO RELATED APPLICATIONS

The present invention contains subject matter related to Japanese Patent Application JP 2007-316636 filed in the Japanese Patent Office on December 7, 2007, the entire contents of which is incorporated herein by reference.

BACKGROUND OF THE INVENTION

1. Field of the Invention

The present invention relates to a learning apparatus, a learning method, a recognition apparatus, a recognition method, and a program, and more particularly, to a learning apparatus, alearningmethod, arecognitionapparatus, arecognitionmethod, and a program that can reliably detect a target object from an image.

2. Description of the Related Art

In the past, the technology of detecting a person from an image was mainly studied and developed for security or vehicle installation (for example, see Non-patent Documents 1 to 6) .

InNon-patent Documents 2 to 6, anoutline feature quantity obtained by extracting edges is used as a main feature quantity for detecting (recognizing) a person from an image. More specifically, in the techniques, various modifications of the outline feature quantity obtained by extracting edges are defined as new feature quantities to recognize a person.

For example, in Non-patent Document 3, a feature quantity is obtained by taking a direction histogram in an edged small area and it becomes resistant to a slight twist of the outline by using the feature quantity. In Non-patent Document 5, there are suggested a learning method using a teaching image of an edged small area and a model obtained by hierarchically learning the edged small areas using the teaching image.

In Non-patent Document 2, parts of a human body are expressed by feature quantities using Gaussian derivatives. In Non-patent Document 6, a person is recognized using global templates of edges.

Non-patent Document 1: Papageorgiou, C., M. Oren, and T. Poggio. "A General Framework for Object Detection" Proceedings of the Sixth International Conference on Computer Vision (ICCV'98), Bombay, India, 555-562, January 1998

Non-patent Document 2: K. Mikolajczyk, C. Schmid, and A. Zisserman "Human detection based on a probabilistic assembly of robust part detectors" Proc. ECCV, 1:69.81, 2004

Non-patent Document 3: Navneet Dalal and Bill Triggs "Histograms of Oriented Gradients for Human Detection" CVPR2005

Non-patent Document 4: B. Wu and R. Nevatia "Detection of multiple, partially occluded humans in a single image by bayesian combination of edgelet part detectors" In Proc. 10th Int. Conf. Computer Vision, 2005

Non-patent Document 5: Payam Sabzmeydani and Greg Mori "Detecting Pedestrians by Learning Shapelet Features" CVPR2007

Non-patent Document 6: S. Munder and D. Gavrilla "An Experimental Study on Pedestrian Classification"

SUMMARY OF THE INVENTION

However, when it is intended to recognize a person from an image by the use of outlines, the above-mentioned techniques have a disadvantage that a person is not detected or is false detected when the outline cannot be extracted from the image well or plural outlines around the background are extracted.

Thus, it is desirable to reliably detect a target object from an image.

According to a first embodiment of the invention, there is provided a learning apparatus including: first feature quantity calculating means for pairing a predetermined pixel and a different pixel in each of a plurality of learning images, which includes a learning image containing a target object to be recognized and a learning image not containing the target object, and calculating a first feature quantity of the pair by calculating a texture distance between an area including the predetermined pixel and an area including the different pixel; and first discriminator generating means for generating a first discriminator for detecting the target object from an image by a statistical learning using a plurality of the first feature quantities.

The learning apparatus may further include: second feature quantity calculating means for making a calculation of extracting an outline from each of the plurality of learning images and generating a second feature quantity from the calculation result; second discriminator generating means for generating a second discriminator for detecting the target object from the image by a statistical learning using a plurality of the second feature quantities; and third discriminator generating means for combining the first discriminator and the second discriminator to generate a third discriminator for detecting the target object from the image.

The third discriminator generating means may generate the third discriminator by linearly combining the first discriminator and the second discriminator.

The learning apparatus may further include second feature quantity calculating means for making a calculation of extracting an outline from each of the plurality of learning images and generating a second feature quantity from the calculation result. Here, the first discriminator generating means may generate the first discriminator by a statistical learning using the plurality of first feature quantities and the plurality of second feature quantities.

According to the first embodiment of the invention, there are provided a learning method or a program allowing a computer to execute the learning method, the learning method including the steps of: pairing a predetermined pixel and a different pixel in each of a plurality of learning images, which includes a learning image containing a target object to be recognized and a learning image not containing the target object, and calculating a feature quantity of the pair by calculating a texture distance between an area including the predetermined pixel and an area including the different pixel; and generating a discriminator for detecting the target object from an image by a statistical learning using a plurality of the feature quantities.

In the first embodiment of the invention, a predetermined pixel and a different pixel in each of a plurality of learning images are paired, which includes a learning image containing a target object to be recognized and a learning image not containing the target object, a first feature quantity of the pair is calculated by calculating a texture distance between an area including the predetermined pixel and an area including the different pixel, and a first discriminator for detecting the target object from an image is generated by a statistical learning using a plurality of the first feature quantities.

According to a second embodiment of the invention, there is provided a recognition apparatus including: first feature quantity calculating means for pairing a predetermined pixel and a different pixel in an input image and calculating a first feature quantity of the pair by calculating a texture distance between an area including the predetermined pixel and an area including the different pixel; and detection means for detecting a target object from the input image, on the basis of the first feature quantity calculated by the first feature quantity calculating means, by the use of a first discriminator generated by statistical learning using a plurality of the first feature quantities obtained from a learning image including the target object to be recognized and a learning image not including the target object.

The recognition apparatus may further include second feature quantity calculating means for making a calculation of extracting an outline from the input image to generate a second feature quantity from the calculation result. Here, the detection means may detect the target object from the input image on the basis of the first feature quantity calculated by the first feature quantity calculating means and the second feature quantity calculated by the second feature quantity calculating means, by the use of a third discriminator obtained by combining the first discriminator with a second discriminator generated by statistical learning using a plurality of the second feature quantities, which are obtained from the learning image including the target object to be recognized and the learning image not including the target object.

The recognition apparatus may further include second feature quantity calculating means for making a calculation of extracting an outline from the input image to generate a second feature quantity from the calculation result. Here, the detection means detects the target object from the input image on the basis of the first feature quantity calculated by the first feature quantity calculating means and the second feature quantity calculated by the second feature quantity calculating means, by the use of the first discriminator generated by statistical learning using the plurality of first feature quantities and the plurality of the second feature quantities, which are obtained from the learning image including the target object to be recognized and the learning image not including the target object.

According to the second embodiment of the invention, there are also provided a recognition method and a program allowing a computer to execute the recognition method, the recognition method including the steps of: pairing a predetermined pixel and a different pixel in an input image and calculating a feature quantity of the pair by calculating a texture distance between an area including the predetermined pixel and an area including the different pixel; and detecting a target object from the input image on the basis of the feature quantity calculated in the step of calculating the feature quantity by the use of a discriminator generated by statistical learning using a plurality of the feature quantities obtained from a learning image including the target object to be recognized and a learning image not including the target object.

In the second embodiment of the invention, a predetermined pixel and a different pixel in an input image are paired, a first feature quantity of the pair is calculated by calculating a texture distance between an area including the predetermined pixel and an area including the different pixel, and a target object is detected from the input image on the basis of the calculated first feature quantity by the use of a first discriminator generated by statistical learning using a plurality of the first feature quantities obtained from a learning image including the target object to be recognized and a learning image not including the target object.

According to the first embodiment of the invention, it is possible to provide a discriminator that can reliably detect a target object from an image.

According to the second embodiment, it is possible to reliably detect a target object from an image.

BRIEF DESCRIPTION OF THE DRAWINGS

Fig. 1 is a block diagram illustrating a configuration of a person discriminating system according to an embodiment of the invention.
Fig. 2 is a block diagram illustrating a detailed configuration of an outline feature quantity calculator.
Fig. 3 is a diagram illustrating a steerable filter.
Fig. 4 is a diagram illustrating the result of a filtering process performed on an image.
Fig. 5 is a diagramillustrating the result of the filtering process performed on an image.
Fig. 6 is a diagram illustrating the result of the filtering process performed on an image.
Fig. 7 is a diagram illustrating the resultant average of the filtering process performed on an image.
Fig. 8 is a diagram illustrating the resultant average of the filtering process performed on an image.
Fig. 9 is a diagram illustrating the resultant average of the filtering process performed on an image.
Fig. 10 is a block diagram illustrating a detailed configuration of a costume discriminator generator.
Fig. 11 is a flowchart illustrating a learning process.
Fig. 12 is a diagram illustrating the extraction of a costume feature point.
Fig. 13 is a diagram illustrating a costume feature quantity.
Fig. 14 is a flowchart illustrating a costume discriminator generating process.
Fig. 15 is a diagram illustrating the sampling of the costume feature quantity of each pair of costume feature points.
Fig. 16 is a diagram illustrating the setting of a weak discriminator.
Fig. 17 is a diagram illustrating a pair of costume feature points.
Figs. 18A and 18B are diagrams illustrating the extraction of an outline feature point.
Fig. 19 is a flowchart illustrating an outline feature quantity calculating process.
Fig. 20 is a flowchart illustrating a person detecting process.
Fig. 21 is a diagram illustrating a display example of the recognition result of a target object.
Fig. 22 is a block diagram illustrating another configuration of the person discriminating system according to the embodiment of the invention.
Fig. 23 is a block diagram illustrating a detailed configuration of a combined discriminator generator.
Fig. 24 is a flowchart illustrating a learning process.
Fig. 25 is a block diagram illustrating a configuration of a computer.

DESCRIPTION OF THE PREFERRED EMBODIMENTS

Hereinafter, embodiments of the invention will be described with reference to the drawings.

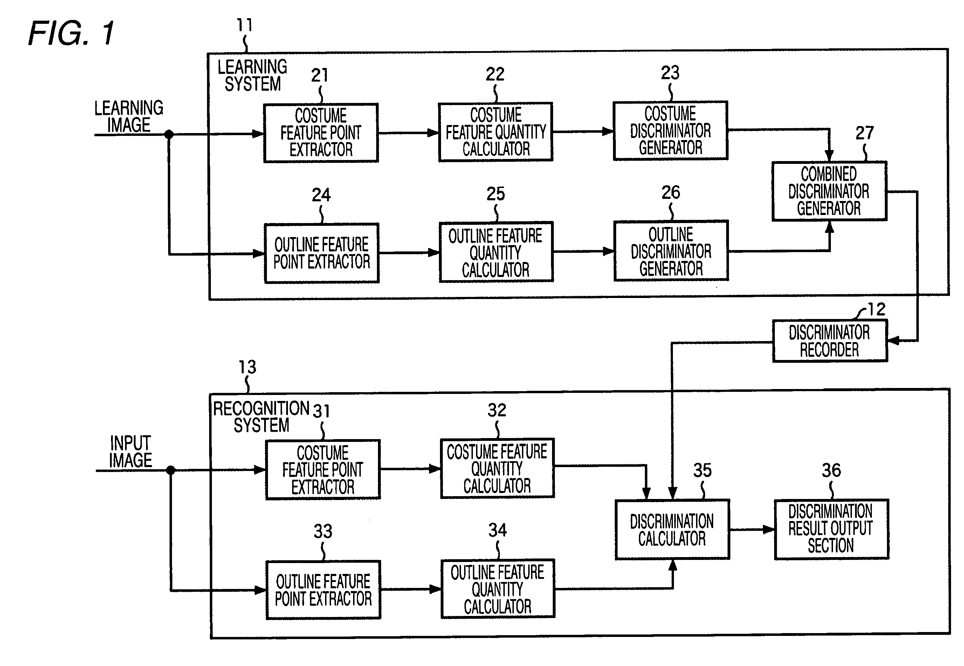

Fig. 1 is a block diagram illustrating a configuration of a person discriminating system according to an embodiment of the invention. The person discriminating system includes a learning apparatus 11, a discriminator recorder 12, and a recognition apparatus 13, and serves to recognize an area including a person as a target object in the input image.
The learning apparatus 11 generates a discriminating feature quantity and a combined discriminator used for the recognition apparatus 13 to discriminate a target object in an image on the basis of an input learning image and records the discriminating feature quantity and the combined discriminator in the discriminator recorder 12. The recognition apparatus 13 discriminates an image of a person as a target object in the input image using the discriminating feature quantity and the combined discriminator recorded in the discriminator recorder 12 and outputs the discrimination result.
The learning apparatus 11 includes a costume feature point extractor 21, a costume feature quantity calculator 22, a costume discriminator generator 23, an outline feature point extractor 24, an outline feature quantity calculator 25, an outline discriminator generator 26, and a combined discriminator generator 27.
The costume feature point extractor 21 extracts several pixels as costume feature points, which are used to generate a costume discriminator, from an input learning image and supplies the extracted costumes feature points and the learning image to the costume feature quantity calculator 22. Here, the costume discriminator means a strong discriminator generated by statistical learning and including plural weak discriminators, and is used to discriminate a person's image area in the input image by the use of the person's costume feature.
The costume feature quantity calculator 22 pairs each of the costume feature points from the costume feature point extractor 21 and a different costume feature point. The costume feature quantity calculator 22 calculates a costume feature quantity indicating a texture distance between two areas every pair of costume feature points on the basis of the learning image from the costume feature point extractor 21 and supplies the calculated costume feature quantities and the learning image to the costume discriminator generator 23.

The costume discriminator generator 23 performs a statistical learning process using an Adaboost algorithm on the basis of the learning image and the costume feature quantities supplied from the costume feature quantity calculator 22 to generate a costume discriminator for recognizing a person as the target object. The costume discriminator generator 23 supplies the generated costume discriminator to the combined discriminator generator 27.

The outline feature point extractor 24 extracts several pixels as outline feature points used to generate an outline discriminator from the input learning image and supplies the extracted outline feature points and the learning image to the outline feature quantity calculator 25. Here, the outline discriminator means a strong discriminator generated by statistical learning and including plural weak discriminators, and is used to discriminate a person's image area in the input image by the use of the person's outline.

The outline feature quantity calculator 25 calculates an outline feature quantity indicating the extracted outline every outline feature point by the use of a filtering process using a steerable filter on the basis of the learning image from the outline feature point extractor 24, and supplies the calculated outline feature quantities and the learning image to the outline discriminator generator 26. The outline discriminator generator 26 performs the statistical learning process using an Adaboost algorithm on the basis of the learning image and the outline feature quantities supplied from the outline feature quantity calculator 25 to generate an outline discriminator for recognizing a person as the target object. The outline discriminator generator 26 supplies the generated outline discriminator to the combined discriminator generator 27.

The combined discriminator generator 27 combines the costume discriminator from the costume discriminator generator 23 and the outline discriminator from the outline discriminator generator 26 to generate a combined discriminator, and supplies and records the generated combined discriminator to and in the discriminator recorder 12. The combined discriminator generator 27 supplies and records to and in the discriminator recorder 12 the costume feature quantities of the pairs of costume feature points and the outline feature quantities of the outline feature points, which are used to recognize the target object by the use of the combined discriminator as discriminating feature quantities.

The recognition apparatus 13 includes a costume feature point extractor 31, a costume feature quantity calculator 32, an outline feature point extractor 33, an outline feature quantity calculator 34, a discrimination calculator 35, and a discrimination result output section 36. The costume feature point extractor 31 through the outline feature quantity calculator 34 of the recognition apparatus 13 perform the same processes as the costume feature point extractor 21, the costume feature quantity calculator 22, the outline feature point extractor 24, and the outline feature quantity calculator 25 of the learning apparatus 11, respectively, on the input image from which the target object should be recognized and thus description thereof is omitted.

The discrimination calculator 35 reads out the discriminating feature quantities and the combined discriminator recorded in the discriminator recorder 12. The discrimination calculator 35 substitutes the read combined discriminator with the feature quantities corresponding to the discriminating feature quantities among the costume feature quantities from the costume feature quantity calculator 32 and the outline feature quantities from the outline feature quantity calculator 34, and makes a calculation. The discrimination result output section 36 acquires the calculation result of the discrimination calculator 35 and outputs the discrimination result indicating whether the target object is recognized from the input image on the basis of the calculation result.

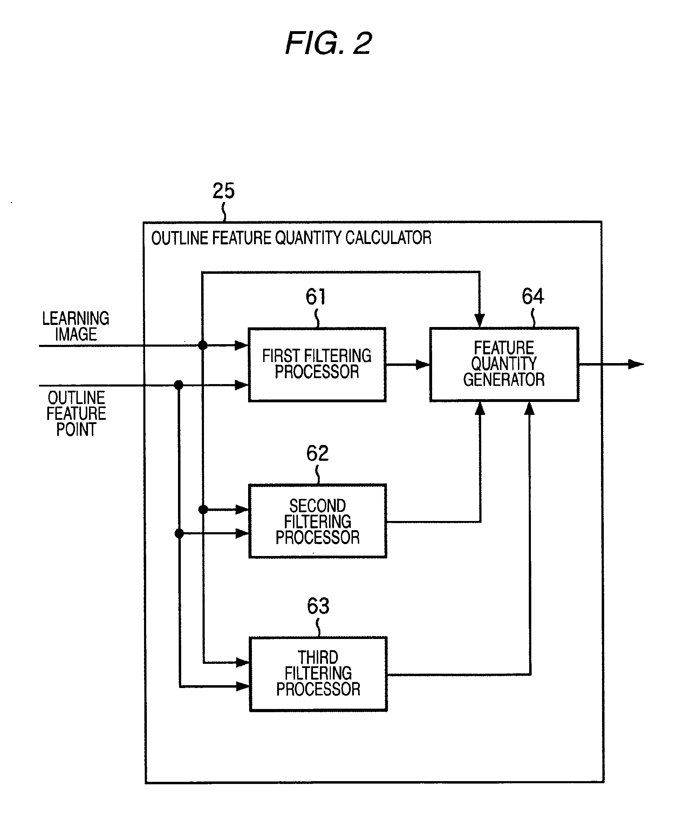

A detailed configuration of the outline feature quantity calculator 25 shown in Fig. 1 will be described now with reference to Fig. 2. The outline feature quantity calculator 25 includes a first filter processor 61, a second filter processor 62, a third filter processor 63, and a feature quantity generator 64. The learning image from the outline feature point extractor 24 is supplied to the first filter processor 61 to the feature quantity generator 64, and the outline feature points are supplied to the first filter processor 61 to the third filter processor 63.

The first filter processor 61 performs a filtering process on each of the supplied outline feature points by the use of a linear differential function $G_1$ of a Gaussian function G to extracts a feature quantity, and supplies the generated feature quantity to the feature quantity generator 64. Here, the Gaussian function G and the linear differential function $G_1$ are expressed by Expressions (1) and (2).

$$G = e^{-\frac{x^2+y^2}{2\sigma^2}} \qquad \cdots (1)$$

$$G_1(\theta) = \cos(\theta)\, G_1(0°) + \sin(\theta)\, G_1(90°) \quad \cdots(2)$$

Here, σ in Expression (1) represents a Gaussian width and θ in Expression (2) represents an angle, that is, a direction of a filter to be calculated.

For example, the first filter processor 61 changes the Gaussian width σ of the Gaussian function G to three predetermined values (for example, Gaussian width σ1, σ2, and σ3=1, 2, and 4, respectively) and calculates Expression (2) in four predetermined directions (for example, θ=θ1, θ2, θ3, and θ4) every Gaussian width σ. The direction θ is not limited to the four directions, but may include directions which are obtained by equally dividing pi into eight directions.

The second filter processor 62 performs a filtering process on each of the supplied outline feature points by the use of a quadratic differential function $G_2$ of a Gaussian function G to extracts a feature quantity, and supplies the generated feature quantity to the feature quantity generator 64. Expression (3) represents the quadratic differential function $G_2$ and θ in Expression (3) represents an angle.

$$G_2(\theta) = k_{21}(\theta)\, G_2(0°) + k_{22}(\theta)\, G_2(60°) + k_{23}(\theta)\, G_2(120°) \quad \cdots(3)$$

The coefficient $k_{2i}(\theta)$ (where i=1, 2, 3) in Expression (3) is a function expressed by Expression (4).

$$k_{2i}(\theta) = \frac{1}{3}\{1 + 2\cos(2(\theta - \theta i))\} \quad \cdots(4)$$

For example, the second filter processor 62 changes the Gaussian width σ of the Gaussian function G to three predetermined values (for example, Gaussian width σ1, σ2, and σ3=1, 2, and 4, respectively) and calculates Expression (3) in four predetermined directions (for example, θ=θ1, θ2, θ3, and θ4) every Gaussian width σ.

The third filter processor 63 performs a filtering process on each of the supplied outline feature points by the use of a cubic differential function $G_3$ of a Gaussian function G to extract a feature quantity, and supplies the generated feature quantity to the feature quantity generator 64. Expression (5) represents the cubic differential function $G_3$ and θ in Expression (5) represents an angle.

$$G_3(\theta) = k_{31}(\theta)\, G_3(0°) + k_{32}(\theta)\, G_3(45°) + k_{33}(\theta)\, G_3(90°) + k_{34}(\theta)\, G_3(135°)$$
$$\cdots(5)$$

The coefficient $k_{3i}(\theta)$ (where i=1, 2, 3) in Expression (5) is a function expressed by Expression (6).

$$k_{3i}(\theta) = \frac{1}{4}\{2\cos(\theta - \theta i) + 2\cos(3(\theta - \theta i))\} \quad \cdots(6)$$

For example, the third filter processor 63 changes the Gaussian width σ of the Gaussian function G to three predetermined values (for example, Gaussian width σ1, σ2, and σ3=1, 2, and 4, respectively) and calculates Expression (5) in four predetermined directions (for example, θ=θ1, θ2, θ3, and θ4) every Gaussian width σ.

The feature quantity generator 64 is supplied with the feature quantities of the outline feature points calculated in four directions θ for each of three kinds of Gaussian widths σ from the first filter processor 61, the second filter processor 62, and the third filter processor 63, arranges the supplied 36 feature quantities in total (=3 (degrees) ×4 (directions) ×3 (Gaussian widths)), and uses the arranged feature quantities as the outline feature quantities of the outline feature points. The feature quantity generator 64 supplies the generated outline feature quantities and the supplied learning image to the outline discriminator generator 26.

In this way, the outline feature quantity calculator 25 employs a filter (base function) having selectivity in direction and frequency, that is, direction θ and the Gaussian width σ, obtained by differentiating the Gaussian function, extracts a different feature quantity (outline) every differential degree, and uses the extracted feature quantities as the outline feature quantities.

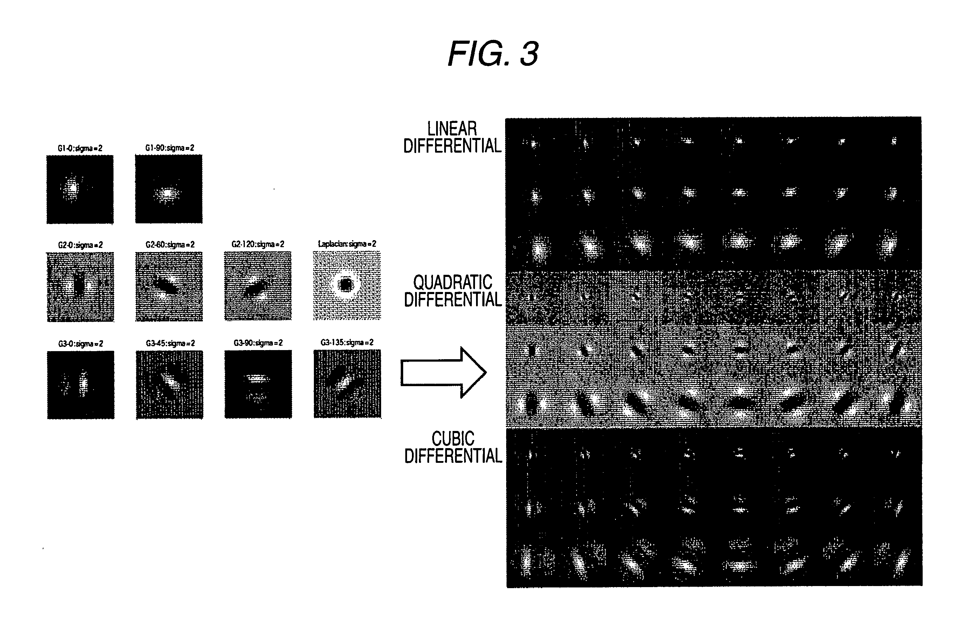

When the steerable filter is used to extract the outline feature quantities and filters different in direction θ and Gaussian width σ are prepared as shown in Fig. 3, a filter, that is, the differential function $G_n$ (where n=1, 2, 3) of the Gaussian function G, in a direction θ can be expressed by the linear combination of the filters.

In Fig. 3, images in the left uppermost line represent the linear differential function $G_1(0°)$ and the linear differential function $G_1(90°)$ with the Gaussian width σ=2 sequentially from the left in the drawing. In the drawing, images in the left middle line represent the quadratic differential function $G_2(0°)$, the quadratic differential function $G_2(60°)$, the quadratic differential function $G_2(120°)$, and the Laplacian with the Gaussian width σ=2 sequentially from the left in the drawing. In the drawing, images in the left lowermost line represent the cubic differential function $G_3(0°)$, the cubic differential function $G_3(45°)$, the cubic differential function $G_3(90°)$, and the cubic differential function $G_3(135°)$ with the Gaussian width σ=2 sequentially from the left in the drawing.

In the drawing, the images in the uppermost line of the right horizontal lines represent the linear differential functions $G_1(θ)$ with the Gaussian width σ=1 from the left in the drawing, where θ is sequentially set to 0, 1/8pi, 2/8pi, 3/8pi, 4/8pi, 5/8pi, 6/8pi, and 7/8pi.

Similarly, in the drawing, the images in the right horizontal lines represent sequentially downward from the second uppermost line the linear differential functions $G_1(θ)$ with the Gaussian width σ=2, the linear differential functions $G_1(θ)$ with the Gaussian width σ=4, the quadratic differential functions $G_2(θ)$ with the Gaussian width σ=1, the quadratic differential functions $G_2(θ)$ with the Gaussian width σ=2, the quadratic differential functions $G_2(θ)$ with the Gaussian width σ=4, the cubic differential functions $G_3(θ)$ with the Gaussian width σ=1, the cubic differential functions $G_3(θ)$ with the Gaussian width σ=2, and the cubic differential functions $G_3(θ)$ with the Gaussian width σ=4, respectively. The images of the respective lines represent the differential functions sequentially from the left in the drawing, where the direction θ is sequentially set to 0, 1/8pi, 2/8pi, 3/8pi, 4/8pi, 5/8pi, 6/8pi, and 7/8pi.

For example, the linear differential functions $G_1(θ)$ in the directions θ in the right second uppermost line in the drawing can be expressed by using the linear differential function $G_1(0°)$ and the linear differential function $G_1(90°)$ which are the left filters in the drawing. Similarly, the quadratic differential functions $G_2(θ)$ in the directions θ in the right fifth uppermost line in the drawing can be expressed by using the quadratic differential function $G_2$ in the left of the drawing. Similarly, the cubic differential functions $G_3(θ)$ in the directions θ in the right eighth uppermost line in the drawing can be expressed by using the cubic differential function $G_3$ in the left of the drawing. That is, when the number of base functions is greater than the number of dimensions by 1, the differential function in a direction of each dimension can be expressed by the linear combination of the base functions.

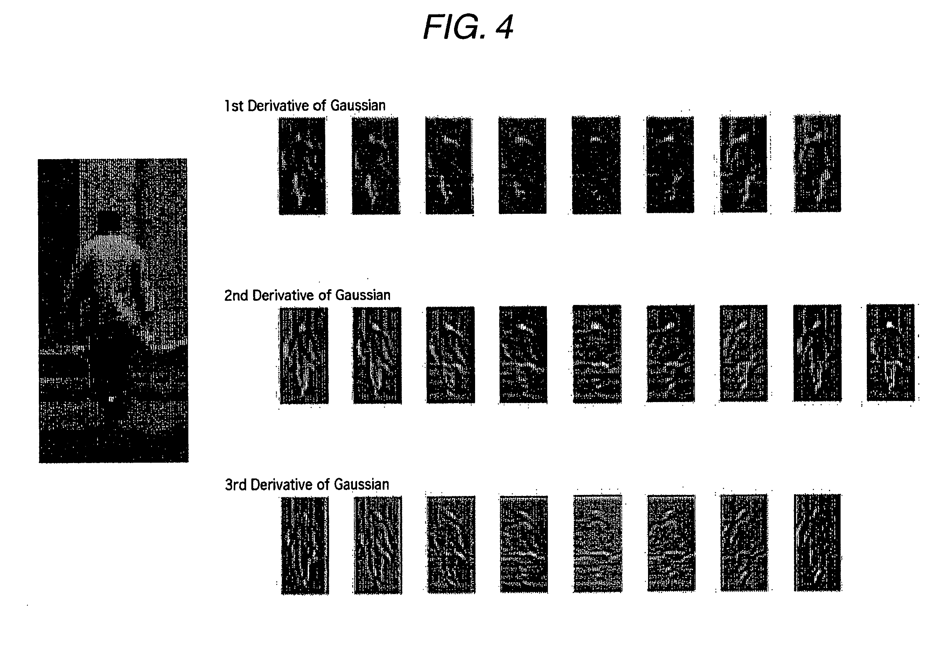

The results of the filtering process performed on an image including a person by the use of the differential functions of the Gaussian function G in which the Gaussian width σ is changed are shown in Figs. 4 to 6. In Figs. 4 to 6, an image to be filtered is shown in the left of the drawings.

In the right of Fig. 4, the images in the uppermost horizontal line represent the results of the filtering process sequentially from the left, where the Gaussian width is σ=1 and θ of the linear differential function $G_1(θ)$ is sequentially set to 0, 1/8pi, 2/8pi, 3/8pi, 4/8pi, 5/8pi, 6/8pi, and 7/8pi.

Similarly, in the right of Fig. 4, the images in the middle horizontal line represent the results of the filtering process sequentially from the left, where the Gaussian width is σ=1, θ of the quadratic differential function $G_2(θ)$ is sequentially set to 0, 1/8pi, 2/8pi, 3/8pi, 4/8pi, 5/8pi, 6/8pi, and 7/8pi, and the Laplacian is used. In the drawing, the images in the lowermost horizontal line represent the results of the filtering process sequentially from the left, where the Gaussian width is σ=1 and θ of the cubic differential function $G_3(θ)$ is sequentially set to 0, 1/8pi, 2/8pi, 3/8pi, 4/8pi, 5/8pi, 6/8pi, and 7/8pi.

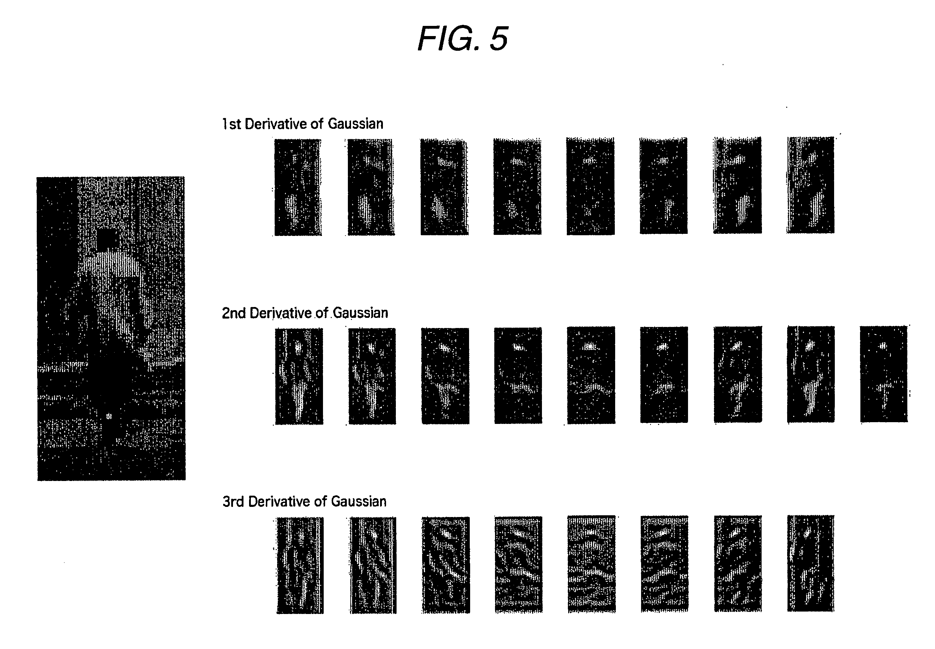

Fig. 5 shows the results of the filtering process when the Gaussian width σ is 2. That is, in the right of Fig. 5, the images in the uppermost horizontal line represent the results of the filtering process sequentially from the left, where the Gaussian width is σ=2 and θ of the linear differential function $G_1(θ)$ is sequentially set to 0, 1/8pi, 2/8pi, 3/8pi, 4/8pi, 5/8pi, 6/8pi, and 7/8pi.

Similarly, in the right of Fig. 5, the images in the middle horizontal line represent the results of the filtering process sequentially from the left, where the Gaussian width is σ=2, θ of the quadratic differential function $G_2(θ)$ is sequentially set to 0, 1/8pi, 2/8pi, 3/8pi, 4/8pi, 5/8pi, 6/8pi, and 7/8pi, and the Laplacian is used. In the drawing, the images in the lowermost horizontal line represent the results of the filtering process sequentially from the left, where the Gaussian width is σ=2 and θ of the cubic differential function $G_3(\theta)$ is sequentially set to 0, 1/8pi, 2/8pi, 3/8pi, 4/8pi, 5/8pi, 6/8pi, and 7/8pi.

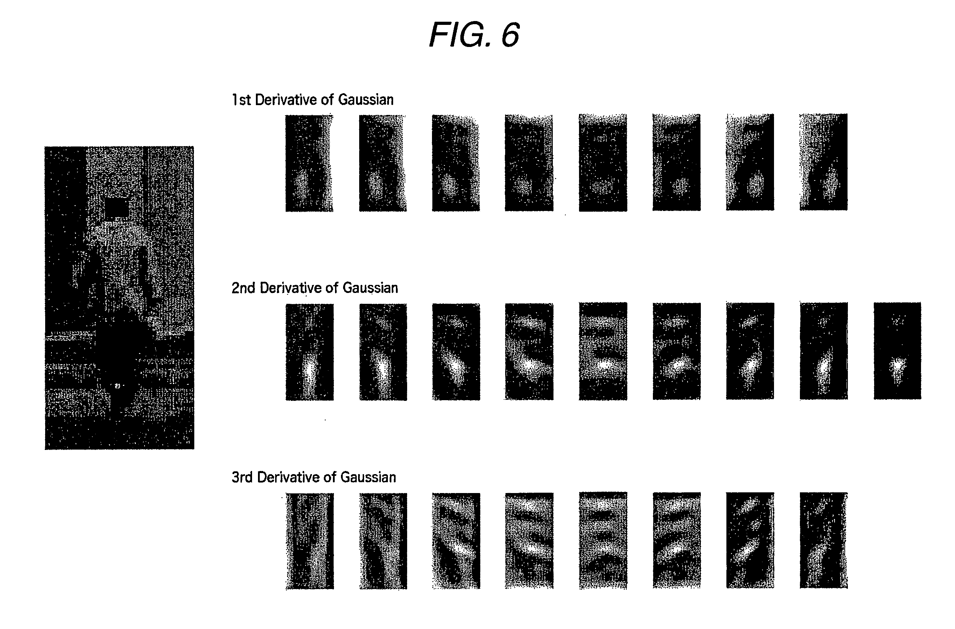

Fig. 6 shows the results of the filtering process when the Gaussian width σ is 4. That is, in the right of Fig. 6, the images in the uppermost horizontal line represent the results of the filtering process sequentially from the left, where the Gaussian width is σ=4 and θ of the linear differential function $G_1(\theta)$ is sequentially set to 0, 1/8pi, 2/8pi, 3/8pi, 4/8pi, 5/8pi, 6/8pi, and 7/8pi.

Similarly, in the right of Fig. 6, the images in the middle horizontal line represent the results of the filtering process sequentially from the left, where the Gaussian width is σ=4, θ of the quadratic differential function $G_2(\theta)$ is sequentially set to 0, 1/8pi, 2/8pi, 3/8pi, 4/8pi, 5/8pi, 6/8pi, and 7/8pi, and the Laplacian is used. In the drawing, the images in the lowermost horizontal line represent the results of the filtering process sequentially from the left, where the Gaussian width is σ=4 and θ of the cubic differential function $G_3(\theta)$ is sequentially set to 0,1/8pi, 2/8pi, 3/8pi, 4/8pi, 5/8pi, 6/8pi, and 7/8pi.

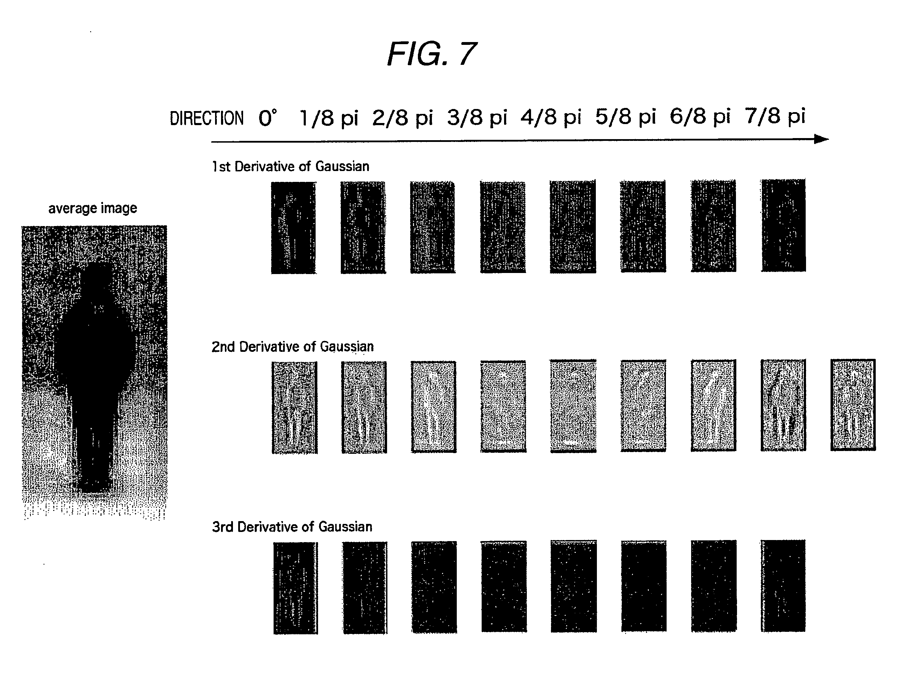

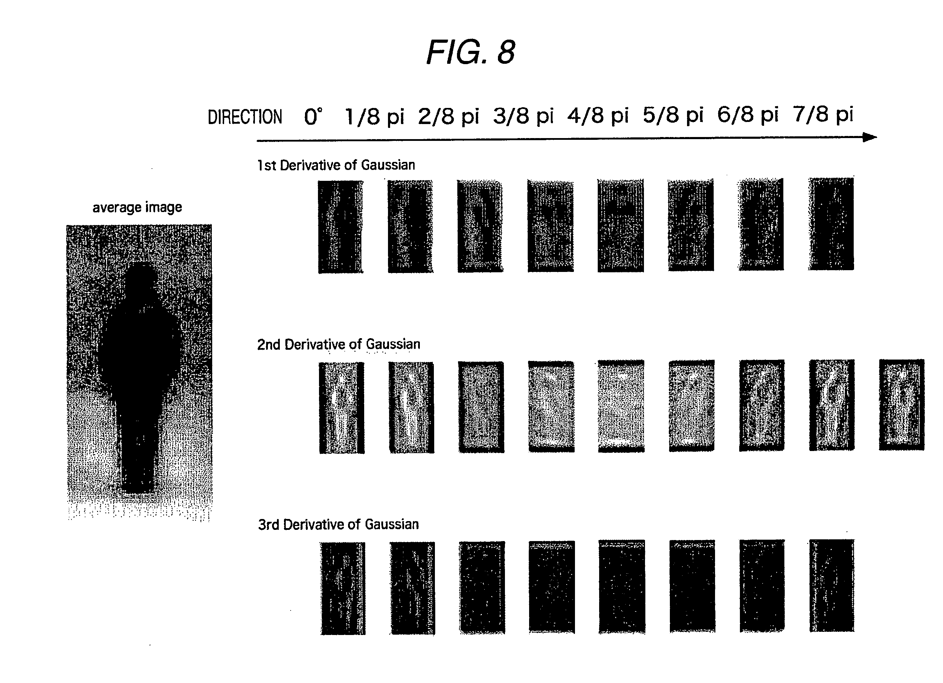

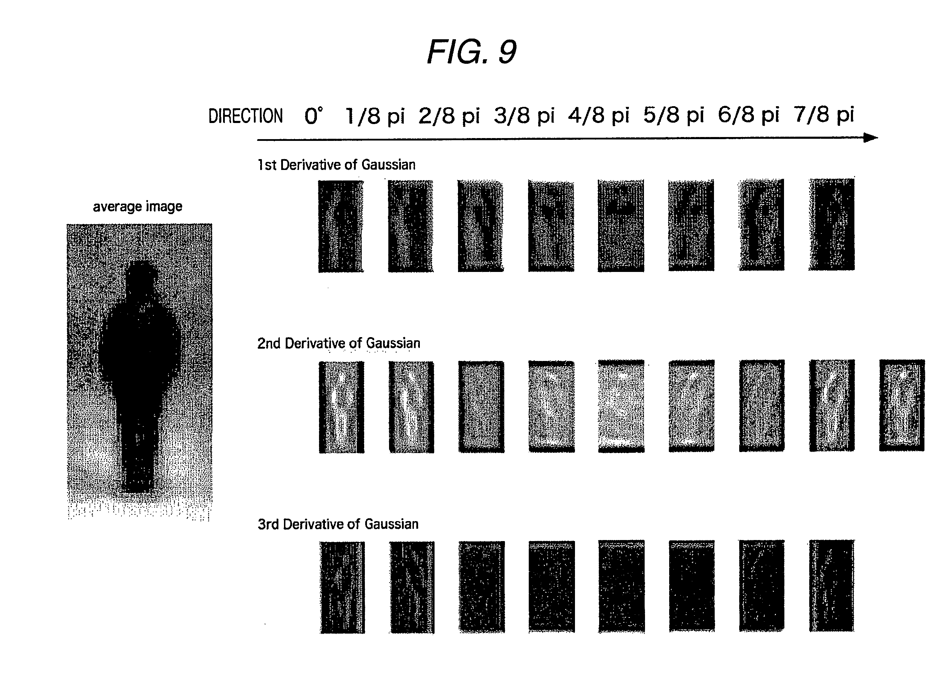

Images obtained by performing the filtering processes of the filters shown in Figs. 4 to 6 on plural different images and averaging the results are shown in Figs. 7 to 9. That is, in Figs . 7 to 9, the resultant averages of the filtering processes where the Gaussian width σ is sequentially set to 1, 2, and 4 are shown. In Figs. 7 to 9, images obtained by averaging the images to be filtered are shown in the left.

Accordingly, in Figs. 7 to 9, the lines of the images arranged horizontally in the right of the drawing represent the resultant averages of the filtering processes as on the lines of images in the right of Figs. 4 to 6, respectively, performed on plural images. For example, in the right of Fig. 7, the uppermost line of images represent the resultant average of the filtering process sequentially from the left, where the Gaussian width is σ=1 and θ of the linear differential function $G_1(\theta)$ is sequentially set to 0, 1/8pi, 2/8pi, 3/8pi, 4/8pi, 5/8pi, 6/8pi, and 7/8pi.

In Figs. 7 to 9, a person's outline can be seen from the image of the resultant average of the filtering processes and it can be seen that the person's outline is properly extracted from the images by the filtering process using the filters.

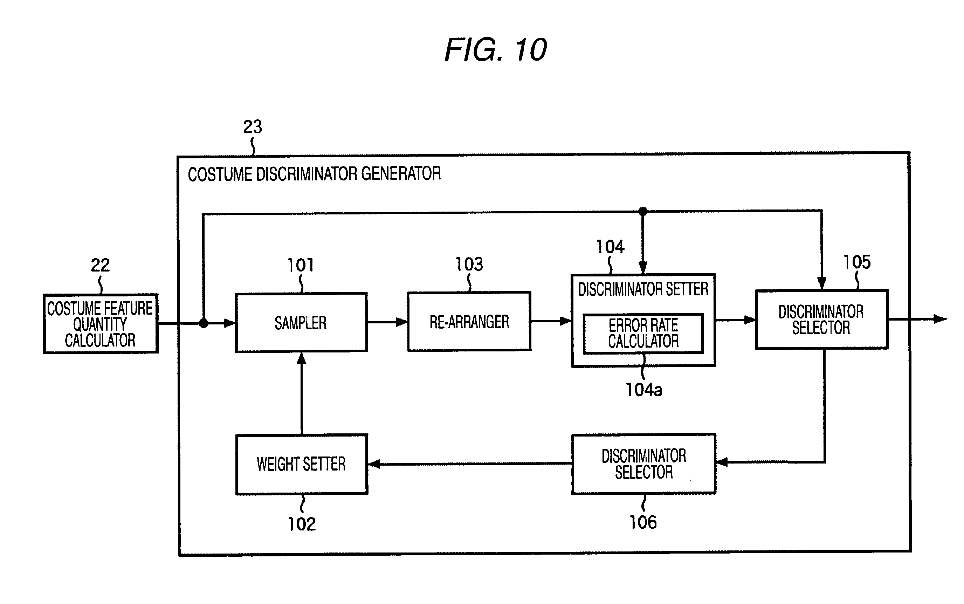

Fig. 10 is a block diagram illustrating a detailed configuration of the costume discriminator generator 23 shown in Fig. 1. The costume discriminator generator 23 includes a sampler 101, a weight setter 102, a re-arranger 103, a discriminator setter 104, a discriminator selector 105, and a weight updating section 106.

The sampler 101 samples M costume feature quantities from the costume feature quantities of the pairs of costume feature points located at the same positions of plural learning images every pair of costume feature points depending on weights by learning images set by the weight setter 102 and supplies the sampled M costume feature quantities to the re-arranger 103.

The re-arranger 103 rearranges the sampled M costume feature quantities for the pairs of costume feature points in an ascending order or a descending order and supplies the rearranged costume feature quantities to the discriminator setter 104.

The discriminator setter 104 controls the error rate calculator 104a to calculate the error rate while changing a threshold value of the respective costume feature quantities of the pairs rearranged in the ascending order or the descending order on the error information indicating whether the target object to be recognized is included in the learning image from which the costume feature quantities have been extracted, and sets the threshold values to minimize the error rate (this threshold values are set as the weak discriminators). The discriminator setter 104 supplies the error rates of the weak discriminators to the discriminator selector 105.

More specifically, the error information (label) indicating whether the target object is included in the learning image is added to the learning image, and the discriminator setter 104 sets the weak discriminators on the basis of the error information added to the learning image supplied from the costume feature quantity calculator 22.

The discriminator selector 105 selects the weak discriminator minimizing the error rate to update the costume discriminator including the weak discriminators, and supplies the resultant costume discriminator and the costume feature quantities corresponding to the weak discriminators to the combined discriminator generator 27. The discriminator selector 105 calculates the reliability on the basis of the error rate of the selected weak discriminator and supplies the reliability to the weight updating section 106.

The weight updating section 106 re-calculates a weight of each learning image on the basis of the supplied reliability, normalizes and updates the weights, and supplies the update result to the weight setter 102. The weight setter 102 sets the weights in the unit of learning image on the basis of the weight update result supplied from the weight updating section 106.

Since the outline feature quantity calculator 34 shown in Fig. 1 has the same configuration as the outline feature quantity calculator 25 shown in Fig. 2 and the outline discriminator generator 26 shown in Fig. 1 has the same configuration as the costume discriminator generator 23 shown in Fig. 10, the illustration and description thereof are omitted.

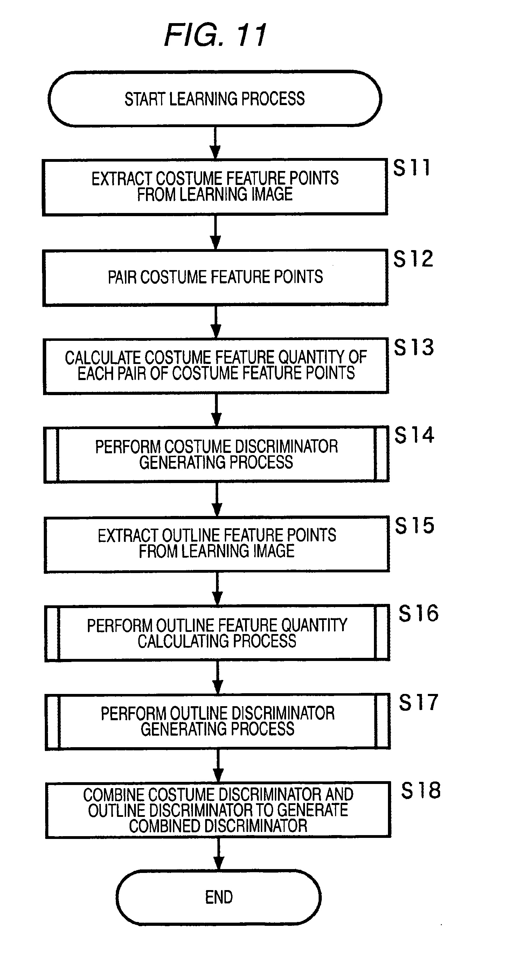

When a learning image is input to the learning apparatus 11 and it is instructed to generate a combined discriminator, the learning apparatus 11 starts a learning process and generates the combined discriminator by statistical learning. The learning process of the learning apparatus 11 will be described now with reference to the flowchart shown in Fig. 11.

In step S11, the costume feature point extractor 21 extracts the costume feature points from the input learning image and supplies the extracted costume feature points and the learning image to the costume feature quantity calculator 22.

In step S12, the costume feature quantity calculator 22 pairs the costume feature points on the basis of the costume feature points and the learning image supplied from the costume feature point extractor 21.

In step S13, the costume feature quantity calculator 22 calculates the costume feature quantity of each pair of costume feature points paired by the pairing process, and supplies the resultant costume feature quantities to the costume discriminator generator 23.

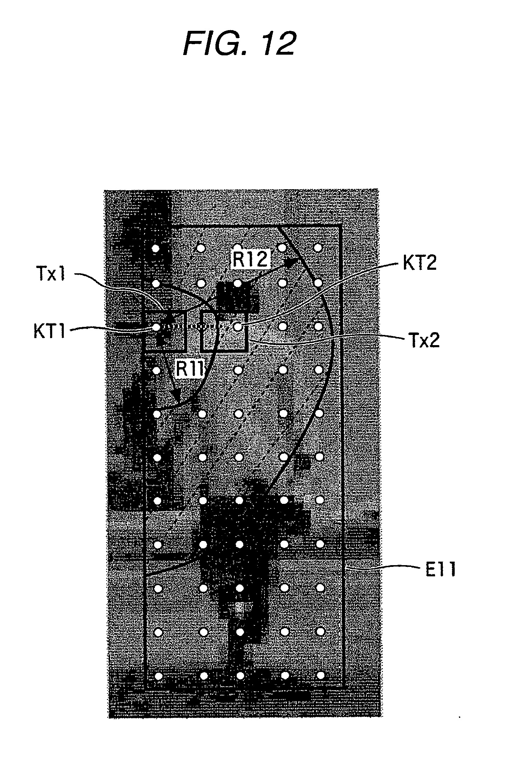

For example, when the learning image shown in Fig. 12 is input to the costume feature point extractor 21, the costume feature point extractor 21 extracts the costume feature points from the learning image on the basis of a predetermined margin and a sampling skip number. In Fig. 12, circles in the learning image represents pixels serving as the costume feature points.

Here, the margin means the number of pixels from an end of the learning image to an area from which the costume feature point is extracted in the learning image. The sampling skip number means a gap between pixels in the learning image serving as the costume feature points.

Accordingly, for example, when the margin is 5 pixels and the sampling skip number is 5 pixels, the costume feature point extractor 21 excludes the area including pixels within 5 pixels from the end of the learning image from the learning image and uses the other area E11 as the target from which the costume feature points are extracted. The costume feature point extractor 21 extracts the pixels located apart by 5 pixels from each other among the pixels in the area E11 as the costume feature points. That is, in the drawing, the distance between the neighboring costume feature points in the vertical direction or the horizontal direction) corresponds to 5 pixels and the costume feature points are pixels in the area E11.

Then, the costume feature quantity calculator 22 pairs the costume feature points on the basis of a predetermined minimum radius and a predetermined maximum radius. For example, when the minimum radius is R11, the maximum radius is R12, and a predetermined costume feature point KT1 is noted, the costume feature quantity calculator 22 pairs the costume feature point KT1 and all the costume feature points to which the distance from the costume feature point KT1 is equal to or more than the minimum radius R11 and equal to or less than the maximum radius R12.

Accordingly, for example, when the number of costume feature points to which the distance from the costume feature point KT1 is equal to or more than the minimum radius R11 and equal to or less than the maximum radius R12 is N, N pairs of costume feature points are obtained. The costume feature quantity calculator 22 pairs all the costume feature points and different costume feature points.

The costume feature quantity calculator 22 calculates as a costume feature quantity a texture distance between areas having a predetermined shape and a predetermined size centered on the costume feature points of the respective pairs of costume feature points obtained by the pairing.

For example, when the costume feature quantity of the pair of costume feature point KT1 and costume feature point KT2 shown in Fig. 12 is calculated by the sum of square distance (SSD), the costume feature quantity calculator 22 sets a predetermined area centered on the costume feature point KT1 as an area TX1 and sets an area centered on the costume feature point KT2 and having the same size as the area TX1 as the an area TX2. Then, the costume feature quantity calculator 22 calculates the sum of absolute differences between the pixel values of the pixels in the area TX1 and the pixel values of the pixels in the area TX2 corresponding to the pixels and uses the calculated sum of absolute differences as the costume feature quantity.

The costume feature quantity is not limited to the SSD, but may be a sum of absolute distances (SAD) or a normalized correlation.

In this way, the costume feature quantity calculator 22 calculates the costume feature quantities of the pairs of costume feature points extracted from the learning image. More specifically, several learning images including the target object and several learning images not including the target object are input to the learning apparatus 11. The extraction of costume feature points and the calculation of costume feature quantities are performed on the respective input learning images.

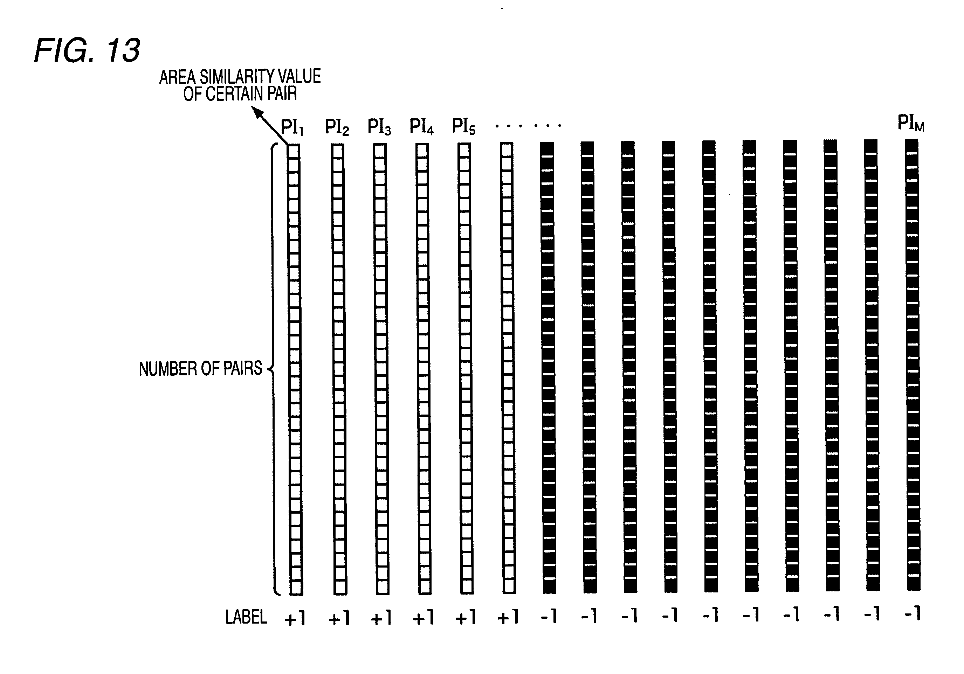

Accordingly, for example, when M (where M is a natural number) learning images $PI_1$ to $PI_M$ are input to the learning apparatus 11, as shown in Fig. 13, the costume feature quantities of the pairs of costume feature points are obtained from the M learning images $PI_i$ (where $1 \leq i \leq M$).

In Fig. 13, one rectangle represents the costume feature quantity of one pair of costume feature points. In the drawing, a line of rectangles arranged in the vertical direction represent a line of costume feature quantities obtained from one learning image $PI_i$ (where $1 \leq i \leq M$), and the costume feature quantities corresponding to the number of pairs of costume feature points obtained from the learning image $PI_i$ are arranged in the line. That is, the number of pairs of costume feature points obtained from one learning image $PI_i$ is the dimension of the costume feature quantities of the learning image $PI_i$.

In the drawing of the line of costume feature quantities of each learning image $PI_i$, a label (error information) indicating whether the target object is included in the learning image $PI_i$ is shown in the lower side. For example, the label "+1" shown in the lower side of the line of costume feature quantities of the learning image $PI_1$ indicates that the target object is included in the learning image $PI_1$, and the label "-1" shown in the lower side of the line of costume feature quantities of the learning image $PI_M$ indicates that the target object is not included in the learning image $PI_M$.

Referring to the flowchart of Fig. 11 again, when the costume feature quantities are obtained in step S13, the costume discriminator generator 23 performs a costume discriminator generating process to generate the costume discriminator in step S14.

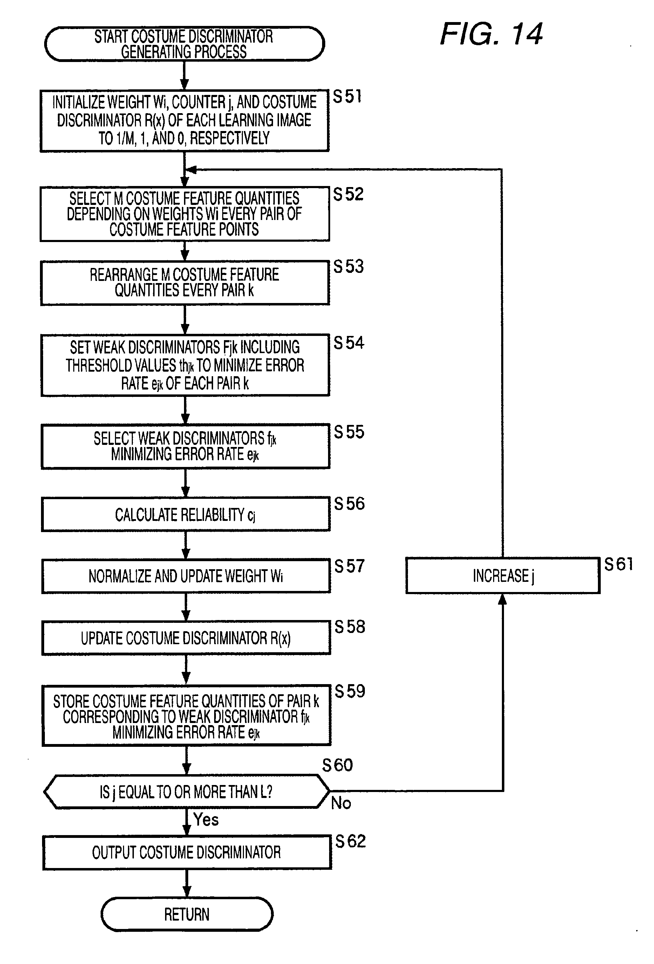

The costume discriminator generating process corresponding to the process of step S14 will be described now with reference to the flowchart of Fig. 14.

In step S51, the weight setter 102 initializes the weights Wi of the learning images $PI_i$ (where $1 \leq i \leq M$) shown in Fig. 13 to 1/M, the discriminator selector 105 initializes a counter j and a costume discriminator R(x) including the sum of weak discriminators to 1 and 0, respectively.

Here, i identifies the learning image $PI_i$ in Fig. 13 and satisfies $1 \leq i \leq M$. In step S51, the weights Wi of all the learning images $PI_i$ becomes the same normalized weight (=1/M). The counter j indicates a predetermined number of times for updating the costume discriminator R(x).

In step S52, the sampler 101 selects M costume feature quantities from the costume feature quantities of the pairs of costume feature points located at the same positions in the plural learning images $PI_i$ depending on the weight Wi of the learning image $PI_i$ every pair of costume feature points, and supplies the selected M costume feature quantities to the re-arranger 103.

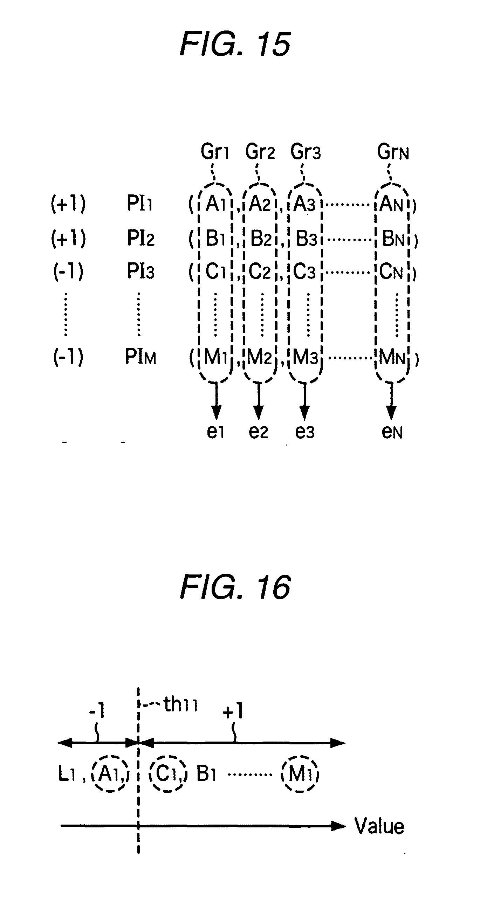

For example, as shown in Fig. 15, it is assumed that the costume feature quantities of the M learning images $PI_1$ to $PI_M$ are supplied to the sampler 101 from the costume feature quantity calculator 22. In Fig. 15, the costume feature quantities obtained from the learning image $PI_i$ (where $1 \leq i \leq M$) are arranged in the horizontal direction of the drawing and the numeral "+1" or "-1" in the left side of the characters $PI_i$ indicating the learning images indicates the label (error information) added to the learning image $PI_i$.

That is, $(A_1, A_2, A_3, ..., A_N)$ arranged in the horizontal direction in the uppermost of the drawing represent the costume feature quantities of the pairs of costume feature points in the learning image $PI_1$, and the numeral "+1" in the left of the character "$PI_1$" indicating the learning image $PI_1$ represents a label indicating that the target object is included in the learning image $PI_1$.

Similarly, $(B_1, B_2, B_3, ..., B_N)$ arranged in the horizontal direction in the second uppermost of the drawing represent the costume feature quantities of the pairs of costume feature points in the learning image $PI_2$, and the numeral "+1" in the left of the character "$PI_2$" indicating the learning image $PI_2$ represents a label indicating that the target object is included in the learning image $PI_2$.

$(C_1, C_2, C_3, ..., C_N)$ arranged in the horizontal direction in the third uppermost of the drawing represent the costume feature quantities of the pairs of costume feature points in the learning image $PI_3$, and the numeral "-1" in the left of the character "$PI_3$" indicating the learning image $PI_3$ represents a label indicating that the target object is not included in the learning image $PI_3$. $(M_1, M_2, M_3, ..., M_N)$ arranged in the horizontal direction in the M-th uppermost of the drawing represent the costume feature quantities of the pairs of costume feature points in the learning image $PI_M$, and the numeral "-1" in the left of the character "$PI_M$" indicating the learning image $PI_M$ represents a label indicating that the target object is not included in the learning image $PIM_2$.

In this way, in the example of Fig. 15, the costume feature quantities of N pairs of costume feature points are obtained from one learning image $PI_i$. In Fig. 15, M costume feature quantities $A_k$ to $M_k$ (where $1 \leq k \leq N$) arranged in the vertical direction form a group $Gr_k$, and the costume feature quantities belonging to the group $Gr_k$ are the costume feature quantities of the pairs of costume feature points located at the same position of the learning images $PI_i$.

For example, the group $Gr_1$ includes the costume feature quantities $A_1$ to $M_1$ arranged in the vertical direction, and two costume feature points forming a pair of the learning image $PI_1$ from which the costume feature quantity $A_1$ is obtained and two costume feature points forming a pair of the learning image $PI_M$ from which a different costume feature quantity belonging to the group $Gr_1$, for example, the costume feature quantity $M_1$, is obtained are located at the same positions in the learning images. In the following description, the pairs of costume feature points in the learning images $PI_i$ from which the costume feature quantities belonging to the group $Gr_k$ (where $1 \leq i \leq M$) are obtained is referred to as pair k.

When the costume feature quantities of the learning images $PI_i$ shown in Fig. 15 are supplied to the sampler 101, the sampler 101 selects M costume feature quantities from the costume feature quantities belonging to each pair k, that is, each group $Gr_k$, depending on the weights Wi of the learning images $PI_i$ by lottery. For example, the sampler 101 selects M costume feature quantities from the costume feature quantities $A_1$ to $M_1$ belonging to the group $Gr_1$ depending on the weight Wi. In the first process, since all the weights Wi are 1/M, all the costume feature quantities are selected in probability by the lottery of M. Accordingly, it is assumed herein that all the costume feature quantities are selected in the first process belonging to each group $Gr_k$. Of course, the same costume feature quantity may be repeatedly selected.

The weights Wi may be used in the calculation of error every pair of costume feature quantities. In this case, the error calculation is made by multiplying a data weight coefficient (weight Wi) by the error value.

In step S53, the re-arranger 103 rearranges the M costume feature quantities selected every group $Gr_k$, that is, every pair k, of the N groups $Gr_k$ in the ascending order or the descending order, and supplies the rearranged costume feature quantities to the discriminator setter 104. For example, the M costume feature quantities selected from the costume feature quantities belonging to the group $Gr_1$ in Fig. 15 are sequentially rearranged.

In step S54, the discriminator setter 104 controls the error rate calculator 104a to calculate the error rate $e_{jk}$ as shown in Expression (7) while changing the threshold value every group $Gr_k$, that is, every pair of costume feature points k, on the basis of the error information (label) added to the learning images supplied from the costume feature quantity calculator 22 and sets the threshold value to minimize the error rate $e_{jk}$.

Here, the threshold value $th_{jk}$ of each pair of costume feature points k serves as a weak discriminator $f_{jk}$. The discriminator setter 104 supplies the error rate $e_{jk}$ of each weak discriminator $f_{jk}$ to the discriminator selector 105. That is, N weak discriminators $f_{jk}$ are set for the N pairs k and the error rates $e_{jk}$ are calculated for the N weak discriminators $f_{jk}$. The weak discriminator $f_{jk}$ is a function of outputting "+1" when the target object to be recognized is included and outputting "-1" when the target object to be recognized is not included.

For example, as shown in Fig. 16, when j=1 and the costume feature quantities of the pair of costume feature points k=1 are arranged in $L_1$, $A_1$, $C_1$, ... , $M_1$ in the ascending order or the descending order, the threshold value $th_{11}$ is set between the costume feature quantities $A_1$ and $C_1$. When it is recognized that there is no target object to be recognized in the range smaller than the threshold value $th_{11}$ (the range indicated by "-1") and it is recognized that there is a target object to be recognized in the range greater than the threshold value $th_{11}$ (the range indicated by "+1"), the costume feature quantity $A_1$ surround with a dotted line is the costume feature quantity of the learning image including the target object to be recognized, which is considered as an error. Since the costume feature quantities C1 and M1 are the costume feature quantities of the learning image not including the target object to be recognized, it is considered as an error.

In the example of Fig. 16, the threshold value $th_{11}$ is set at a position where the error rate $e_{jk}$ is minimized. For example, when the threshold value $th_{11}$ shown in Fig. 16 is not set at the position where the error rate $e_{jk}$ is minimized, the discriminator setter 104 changes the position of the threshold value $th_{11}$, finds out the position of the threshold value $th_{11}$ where the error rate $e_{jk}$ is minimized while referring to the error rate $e_{jk}$ at the positions, and sets the found position as the position of the threshold value $th_{11}$.

As shown in Expression (7), the error rate calculator 104a sums the weights Wi of the learning image from which the costume feature quantities considered as an error are extracted to calculate the error rate $e_{jk}$ on the basis of the error information (label) of the learning image.

$$e_{jk} = E_w \left[ 1_{(y \neq f_{jk})} \right] \qquad \cdots (7)$$

Here, $y \neq f_{jk}$ represents the condition of the pair of costume feature points k considered as the error and $E_w$ represents that the weights are summed in the pair k considered as the error.

In step S55, the discriminator selector 105 selects the weak discriminators $f_{jk}$ minimizing the error rate $e_{jk}$ from the N weak discriminators $f_{jk}$ on the basis of the N error rates $e_{jk}$ of each pair k supplied from the discriminator setter 104. The discriminator selector 105 acquires the weak discriminators $f_{jk}$ selected by the discriminator setter 104.

In step S56, the discriminator selector 105 calculates the reliability $C_j$ expressed by Expression (8) on the basis of the error rates $e_{jk}$ of the selected weak discriminators $f_{jk}$ and supplies the calculation result to the weight updating section 106.

$$c_j = \log \left( (1 - e_j) / e_j \right) \qquad \cdots (8)$$

In Expression (8), $e_j$ represents the error rate $e_{jk}$ of the selected weak discriminators $f_{jk}$ among the error rates $e_{jk}$, that is, the minimum error rate $e_{jk}$ of N error rates $e_{jk}$. In the following description, the weak discriminator of the pair k selected in step S55 is also referred to as a weak discriminator $f_j$ and the error rate $e_{jk}$ of the weak discriminator $f_j$ is also referred to as the error rate $e_j$.

In step S57, the weight updating section 106 re-calculates the weights Wi of the learning images PI$_i$ by calculating Expression (9) on the basis of the supplied reliability C$_j$, normalizes and updates all the weights Wi, and supplies the updating result to the weight setter 102. The weight setter 102 sets the weights of the learning images on the basis of the weight updating result supplied from the weight updating section 106.

$$w_i = w_i \exp\left[-c_j \cdot 1_{(y \neq fj)}\right], \ i = 1, 2, \cdots N \qquad \cdots(9)$$

That is, in Expression (9), it is expressed that the weight Wi of the learning image including the costume feature quantities having an error increases.

In step S58, the discriminator selector 105 updates the stored costume discriminator R(x) using the newly calculated weak discriminators f$_j$. That is, the discriminator selector 105 updates the costume discriminator R(x) by calculating Expression (10).

$$R(x) = R'(x) + c_j + f_x(x) \qquad \ldots \qquad (10)$$

In Expression (10), R'(x) represents a before-updating costume discriminator stored in the discriminator selector 105 and f$_j$(x) represents a newly calculated weak discriminator f$_j$. That is, the discriminator selector 105 updates the costume discriminator by adding the newly calculated weak discriminator, which is multiplied by the reliability C$_j$ and added by the weight, to the stored costume discriminator.

In step S59, the discriminator selector 105 stores the costume feature quantities of the pairs k of costume feature points corresponding to the weak discriminator f$_{jk}$ minimizing the error rate e$_{jk}$ as the discriminating feature quantity.

In step S60, the discriminator selector 105 determines whether the counter j is equal to or more than L. When it is determined in step S60 that the counter j is not equal to or more than L, the discriminator selector 105 increases the counter j in step S61. Then, the flow of processes is returned to step S52 and the above-mentioned processes are repeated.

That is, by using the newly set weights Wi of the learning images, new weak discriminators f$_{jk}$ are set for N pairs k and the weak discriminator f$_{jk}$ minimizing the error rate e$_{jk}$ is selected from the weak discriminators f$_{jk}$. The costume discriminator is updated by the selected weak discriminator f$_{jk}$.

On the contrary, when it is determined in step S60 that the counter j is equal to or more than L, the discriminator selector 105 outputs the stored costume discriminator and the discriminating features to the combined discriminator generator 27 in step S62. Then, the flow of processes goes to step S15 of Fig. 11.

By the above-mentioned processes, the costume discriminator including the weak discriminators f$_j$ (where 1≤j≤L) having relatively low L error rates is supplied to the combined discriminator generator 27 and the costume feature quantities of the pairs k of costume feature points to be used for the weak discriminators f$_j$ are supplied to the combined discriminator generator 27. Here, L satisfies L≤N.

If a discriminator (function) outputting "+1" when the costume discriminator substituted with the costume feature quantity is positive and outputting "-1" when the costume discriminator is negative is generated by the use of the costume discriminator of Expression (10), the discriminator can be treated as a function of outputting the existence of the target object to be recognized by under majority rule of L weak discriminators. The learning process of generating the discriminator by repeatedly adding the weak discriminators described with reference to the flowchart of Fig. 14 while giving the weight by the learning process is called a discrete Adaboost algorithm.

That is, in the above-mentioned costume discriminator generating process, the process of calculating the weak discriminator and the error rate of each pair of costume feature points is repeated so that the weight of the costume feature quantity having a high error rate sequentially increases and the weight of the costume feature quantity having a low error rate sequentially decreases. Accordingly, in the repeated processes (steps S52 to S61), since the costume feature quantities having a high error rate can be easily selected as the costume feature quantities (costume feature quantities selected in step S52) selected at the time of setting the weak discriminators, the costume feature quantities to be hardly recognized are repeatedly selected and the learning is repeated. Therefore, the costume feature quantities of the learning images to be hardly recognized are more selected, thereby finally recognizing the learning image with a high recognition rate.

In the repeated processes (steps S52 to S61), since the discriminator selector 105 typically selects the weak discriminator corresponding to the pair having the lowest error rate, the weak discriminator of the pair of costume feature points having the highest reliability is selected and added to the costume discriminator by the repeating the learning process, and thus the weak discriminators having high precision are sequentially added every repetition.

The costume discriminator is a discriminator for discriminating whether a person as the target object is included in an image by the use of the costume feature quantities. The pairs of costume feature points corresponding to the costume feature quantities substituted for the weak discriminators of the costume discriminator are pairs suitable for detecting the target object from the input image among the pairs of costume feature points.

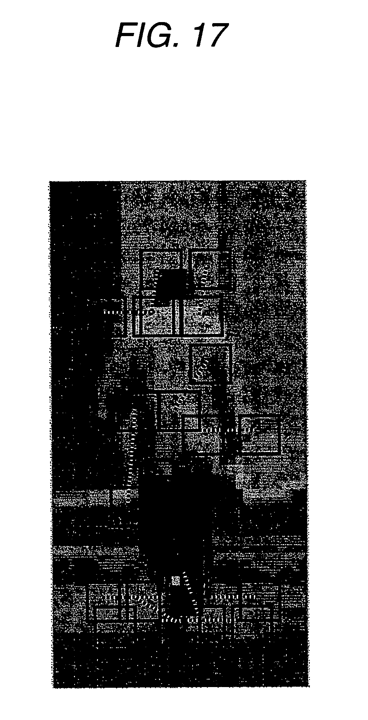

For example, the pairs corresponding to the costume feature quantities substituted for the costume discriminator are pairs of costume feature points around the person as the target object in the image, as shown in Fig. 17. In Fig. 17, the dotted straight line represents a straight line connecting two costume feature points of a pair and the rectangle centered on an end of the dotted line represents a texture area used to calculate the costume feature quantity.

In the example of Fig. 17, it can be seen that a pair including two costume feature points in a suit of the upper half of the person in the image and having a decreasing texture distance, that is, a decreasing costume feature quantity or pair including a costume feature point in the person's suit and a costume feature point in the background but not in the person and having an increasing costume feature quantity is selected.

Referring to the flowchart of Fig. 11 again, the outline feature point extractor 24 extracts the outline feature points from the input learning image in step S15.

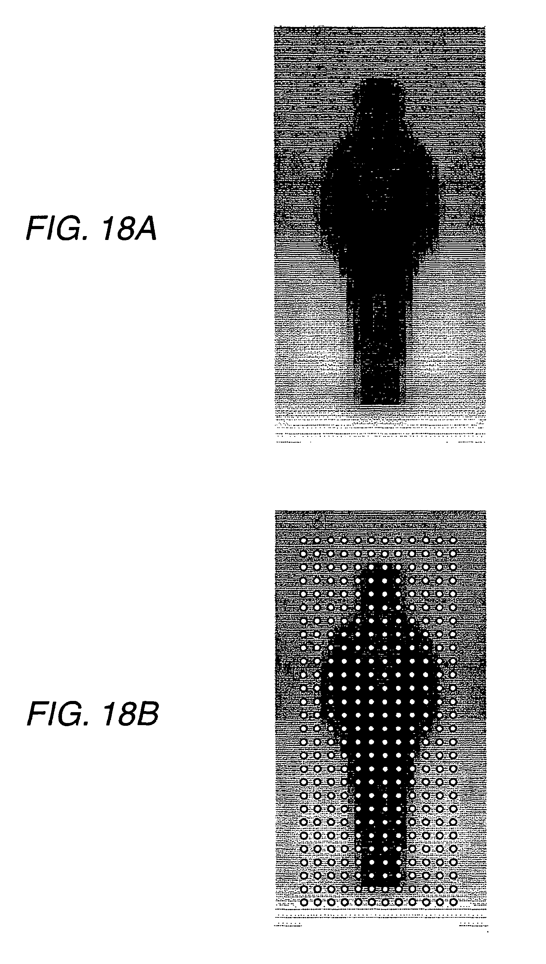

For example, when the learning image shown in Fig. 18A is input to the outline feature extractor 24, the outline feature point extractor 24 extracts pixels arranged with a predetermined interval in the learning image as the outline feature points as shown in Fig. 18B. In Fig. 18B, the circles in the learning image represent the pixels serving as the outline feature points .

The learning image shown in Figs. 18A and 18B is a learning image including 32 pixels in the horizontal direction and 64 pixels in the vertical direction in the drawing. The outline feature point extractor 24 selects the pixels in the learning image as the pixels serving as the outline feature points every 2 pixels in the horizontal direction and the vertical direction. Accordingly, in the learning image, 336 (=12x28) pixels in total including 12 pixels in the horizontal direction and 28 pixels in the vertical direction are selected as the outline feature points.

When extracting the outline feature points from the learning image, the outline feature point extractor 24 supplies the extracted outline feature points and the input learning image to the outline feature quantity calculator 25.

In step S16, the outline feature quantity calculator 25 performs an outline feature quantity calculating process to calculate the outline feature quantities of the outline feature points on the basis of the outline feature points and the learning image supplied from the outline feature point extractor 24.

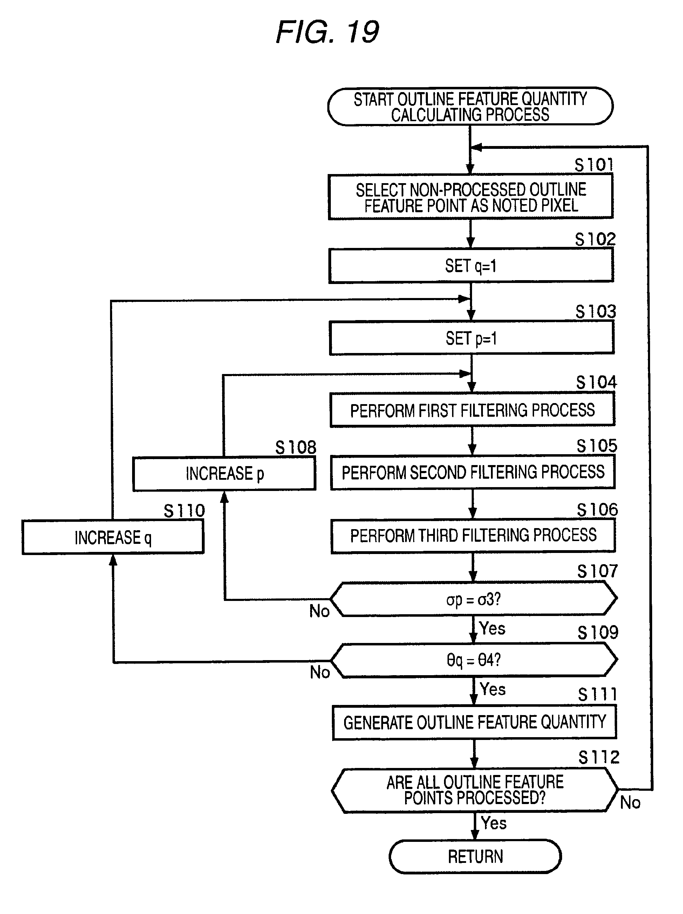

Here, the outline feature quantity calculating process corresponding to the process of step S16 will be described with reference to the flowchart of Fig. 19.

In step S101, the outline feature quantity calculator 25, more specifically, the first filtering processor 61, the second filteringprocessor 62, and the third filteringprocessor 63 of the outline feature quantity calculator 25 select one non-processed outline feature point from the outline feature points supplied from the outline feature point extractor 24 as a noted pixel.

In step S102, the outline feature calculator 25 sets the counter q indicating the direction $\theta_q$ to 1. Accordingly, the direction $\theta_q$ is $\theta_1$.

In step S103, the outline feature quantity calculator 25 sets the counter p indicating the Gaussian width $\sigma_p$ to 1. Accordingly, the Gaussian width $\sigma_p$ is $\sigma_1$.

In step S104, the first filtering processor 61 performs a first filtering process. That is, the first filtering processor 61 calculates Expression (2) using the Gaussian width $\sigma_p$ and the direction $\theta_q$ on the basis of the pixel values of the noted pixels to be processed and supplies the filtering result to the feature quantity generator 64. That is, the direction $\theta$ in Expression (2) is $\theta_q$ and the calculation is made, thereby extracting the outline.

In step S105, the second filtering processor 62 performs a second filtering process. That is, the second filtering processor 62 calculates Expression (3) using the Gaussian width $\sigma_p$ and the direction $\theta_q$ on the basis of the pixel values of the noted pixels to be processed and supplies the filtering result to the feature quantity generator 64. That is, the direction $\theta$ in Expression (3) is $\theta_q$ and the calculation is made, thereby extracting the outline.

In step S106, the third filtering processor 63 performs a third filtering process. That is, the third filtering processor 63 calculates Expression (5) using the Gaussian width $\sigma_p$ and the direction $\theta_q$ on the basis of the pixel values of the noted pixels to be processed and supplies the filtering result to the feature quantity generator 64. That is, the direction $\theta$ in Expression (5) is $\theta_q$ and the calculation is made, thereby extracting the outline.

In step S107, the outline feature quantity calculator 25 determines whether the Gaussian width $\sigma_p$ is $\sigma_3$, that is, whether the counter is p=3. When it is determined in step S107 that the Gaussian width $\sigma_p$ is not $\sigma_3$, the outline feature quantity calculator 25 increases the counter p in step S108. For example, when the counter is p=1, the counter p increases to p=2 and thus the Gaussian width $\sigma_p$ becomes $\sigma_2$. When the counter p increases, the flow of processes is returned to step S104 and the above-mentioned processes are then repeated.

On the contrary, when it is determined in step S107 that the Gaussian width σp is σ3, the outline feature quantity calculator 25 determines whether the direction θq is θ4, that is, whether the counter is q=4, in step S109.

When it is determined in step S109 that the direction 6q is not θ4, the outline feature quantity calculator 25 increases the counter q in step S110. For example, when the counter is q=1 the counter q increases to q=2 and thus the direction θq becomes θ2. When the counter q increases, the flowof processes is returned to step S103 and the above-mentioned processes are then repeated.

On the contrary, when it is determined in step S109 that the direction θq is θ4, the feature quantity generator 64 synthesizes the calculation results supplied from the first filtering processor 61, the second filtering processor 62, and the third filtering processor 63 as the outline feature quantity to generate the outline feature quantity of one outline feature point in step S111.

In step S112, the outline feature quantity calculator 25 determines whether all the outline feature points have been processed. For example, when the outline feature quantities of all the outline feature points supplied from the outline feature point extractor 24 are calculated, it is determined that all the outline feature quantities have been processed.

When it is determined in step S112 that all the outline feature points have not been processed, the flow of processes is returned to step S101 and a next outline feature point is selected as a noted pixel.

On the contrary, when it is determined in step S112 that all the outline feature points have been processed, the feature quantity generator 64 supplies the learning image supplied from the outline feature point extractor 24 and the outline feature quantities of the outline feature points to the outline discriminator generator 26. Thereafter, the flow of processes goes to step S17 of Fig. 11.

The extraction of the outline feature quantities from the learning image is not limited to the steerable filter, but may employ a Gabor filter.

Referring to the flowchart of Fig. 11 again, when the outline feature quantities of the outline feature points are calculated, the outline discriminator generator 26 performs an outline discriminator generating process on the basis of the learning image and the outline feature quantities supplied from the outline feature quantity calculator 25 to generate the outline discriminator in step S17. The outline discriminator generating process is the same as the costume discriminator generating process described with reference to Fig. 14 and thus description thereof is omitted.

That is, the outline discriminator generating process is similar to the costume discriminator generating process, except that the feature quantity to be processed is the costume feature quantity or the outline feature quantity. Accordingly, in the outline discriminator generating process, the outline discriminator is generated from the sum of the weak discriminators corresponding to the outline feature quantities of the outline feature points having the lowest error rate. The outline discriminator generator 26 outputs the generated outline discriminator and the discriminating feature to the combined discriminator generator 27.

In step S18, the combined discriminator generator 27 combines the costume discriminator supplied from the costume discriminator generator 23 and the outline discriminator supplied from the outline discriminator generator 26 to generate a combined discriminator.

For example, since the discriminator obtained by the statistical learning process using the Adaboost algorithm is expressed by the linear combination of the weak discriminators, the combined discriminator generator 27 combines the costume discriminator and the outline discriminator by a late fusion method.

That is, the combined discriminator generator 27 calculates the sum of discriminators $U(x)$ of the costume discriminator $R(x)$ and the outline discriminator $T(x)$ by calculating Expression(11). Thatis,thesum of discriminators $U(x)$ is obtained by linearly combining the costume discriminator $R(x)$ and the outline discriminator $T(x)$.

$$U(x) = \alpha R(x) + \beta \cdot T(x) \quad \ldots \quad (11)$$

In Expression (11), $\alpha$ and $\beta$ represent predetermined constants, that is, tuning parameters, which are calculated by the use of a discrimination rate for the learning image used for the statistical learning process. The outline discriminator $T(x)$ is the sum of the weak discriminators multiplied by the reliability, similarly to the costume discriminator $R(x)$ expressed by Expression (10).

The combined discriminator generator 27 generates the combined discriminator expressed by Expression (12) using the obtained sum of discriminators $U(x)$.

$$\text{Combined discriminator} = \text{sign}(U(x)) \quad \ldots \quad (12)$$

In Expression (12), sign (U(x)) is a function of outputting "+1" indicating that the target object to be recognized is included in the input image when the sum of discriminators U (x) is positive and outputting "-1" indicating that the target object to be recognized is not included in the input image when the sum of discriminators U(x) is negative.

When the combined discriminator is generated in this way, the combined discriminator generator 27 supplies and records the generated combined discriminator to and in the discriminator recorder 12. The combined discriminator generator 27 adds the discriminating feature quantity supplied from the outline discriminator generator 26 to the discriminating feature quantity supplied from the costume discriminator generator 23 to acquire the final discriminating feature quantity, and supplies and records the final discriminating feature quantity to and in the discriminator recorder 12, whereby the learning process is finished.

As described above, the learning apparatus 11 extracts the costume feature points from the learning image, calculates the costume feature quantities of the pairs of the costume feature points, generates the costume discriminator by the statistical learning, extracts the outline feature points from the learning image, calculates the outline feature quantities, and generates the outline discriminator by the statistical learning. Then, the learning apparatus 11 combines the costume discriminator and the outline discriminator by the linear combination to generate the combined discriminator.

By combining the costume discriminator and the outline discriminator to generate the combined discriminator in this way, it is possible to provide a combined discriminator that can reliably detect a target object from an image. That is, the combined discriminator is obtained by combining the costume discriminator based on the costume features of the target object and the outline discriminator based on the outline of the target object. Accordingly, when at least one feature quantity can be sufficiently extracted from the input image, it is possible to detect the target object from the image.

When a person as the target object should be detected from the image, the person as the target object should be detected as a person even when the person's costume is changed. Accordingly, in the past, only the outline was used as the feature quantity not related to the brightness of the person's costume to detect the person from the image.

On the contrary, the learning apparatus 11 uses the costume feature quantity which is not changed with the change of the person's costume pattern based on the person's costume feature to detect the person from the image. The costume feature quantity is a newly defined feature quantity by noting that a person often wears a suit having a pattern in which the same texture is repeated in a person's upper half (shirts) and a pattern in which the same texture is repeated in the lower half (trunk).

That is, the costume feature quantity represents the similarity in texture between two areas in an image, that is, the degree of similarity between the brightness patterns. For example, the similarity in texture between two areas in a person's upper half is high and the similarity in texture between the upper half and the lower half or the similarity in texture between the person's costume and the background is low. The learning apparatus 11 generates the combined discriminator using the costume discriminator for detecting a person from an image based on the similarity in texture between two areas.

Accordingly, for example, when the outline cannot be satisfactorily extracted from the input image but the similar feature in texture between two areas can be satisfactorily extracted from the image, it is possible to detect a person from the image using the combined discriminator. On the contrary, when a person in an image wears a suit having a non-repeated pattern or the suit is partially covered with a bag or the like, the similar feature in texture may not be satisfactorily extracted from the image. However, when the outline can be satisfactorily extracted from the image, it is possible to detect a person from the image using the combined discriminator.

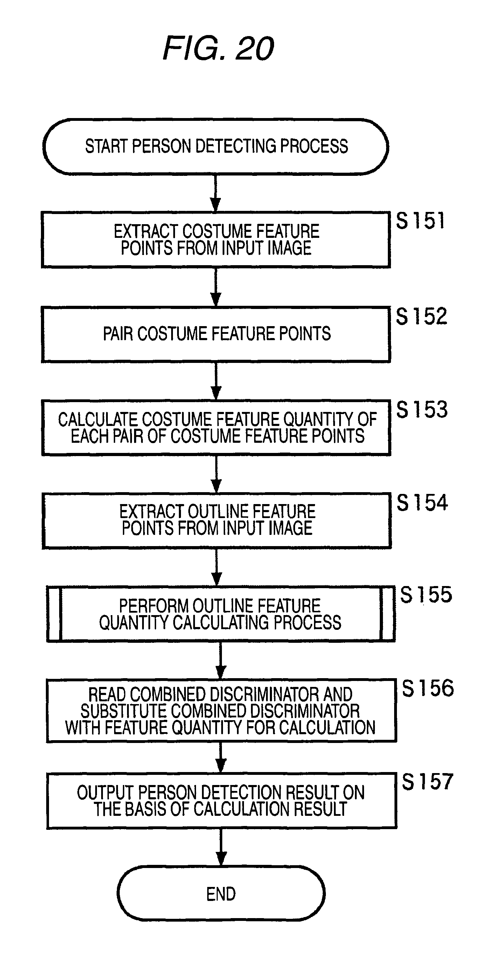

When an input image is input to the recognition apparatus 13 and it is instructed to detect a person as the target object, the recognition apparatus 13 starts a person detecting process and detects the target obj ect from the input image. Hereinafter, the person detecting process of the recognition apparatus 13 will be described now with reference to the flowchart of Fig. 20.

The processes of steps S151 to S153 are similar to the processes of steps S11 to S13 in Fig. 11 and thus description thereof is omitted. That is, the costume feature point extractor 31 extracts the costume feature points from the input image, the costume feature quantity calculator 32 pairs the costume feature points extracted by the costume feature point extractor 31 and calculates the costume feature quantities of the pairs. The costume feature quantity calculator 32 supplies the costume feature quantities calculated for the pairs to the discrimination calculator 35.

In step S154, the outline feature point extractor 33 performs the same process as step S15 of Fig. 11 to extract the outline feature points from the input image and supplies the extracted outline feature points to the outline feature quantity calculator 34 along with the input image.

In step S155, the outline feature quantity calculator 34 performs an outline feature quantity calculating process to calculate the outline feature quantities of the outline feature points on the basis of the input image and the outline feature points from the outline feature point extractor 33. Then, the outline feature quantity calculator 34 supplies the calculated outline feature quantity to the discrimination calculator 35. The outline feature quantity calculating process is similar to the outline feature quantity calculating process described with reference to Fig. 19 and thus description thereof is omitted.

In step S156, the discrimination calculator 35 reads out the discriminating feature quantities and the combined discriminator from the discriminator recorder 12 and substitutes the read combined discriminator with the feature quantities to make a calculation. That is, the discrimination calculator 35 substitutes the feature quantities corresponding to the discriminating feature quantity among the costume feature quantities from the costume feature quantity calculator 32 and the outline feature quantities from the outline feature quantity calculator 34 for the combined discriminator expressed by Expression (12) to make a calculation.

Here, the feature quantities substituted for the weak discriminators of the combined discriminator are feature quantities obtained from the pairs of costume feature points or the outline feature points in the input image, which are located at the same positions as the pairs of costume feature points or the outline feature points in the learning image from which the feature quantities as the discriminating feature quantities are obtained. The feature quantities as the discriminating feature quantities are feature quantities used to set the weak discriminators of the combined discriminator at the time of performing the statistical learning process.

As the calculation result of Expression (12), "+1" indicating that a person as the target object exists in the input image or "-1" indicating that a person as the target object does not exist in the input image is obtained. The discrimination calculator 35 supplies the calculation result of the combined discriminator to the discrimination result output section 36.

In step S157, the discrimination result output section 36 outputs a person detection result on the basis of the calculation result from the discrimination calculator 35 and then the person detecting process is finished. That is, the discrimination result indicating whether the target object is recognized from the input image is output.

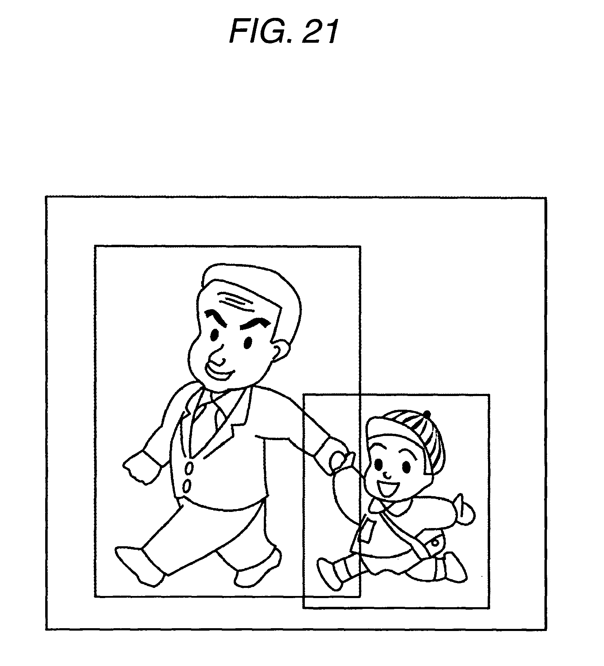

For example, as the discrimination result indicating whether the target object is recognized from the input image, as shown in Fig. 21, an input image in which a frame is displayed in the area from which a person as the target object is detected may be displayed by the discrimination result output section 36.

The input image shown in Fig. 21 is an image in which two persons exist at the target object. Frames surrounding the respective persons are displayed in the input image. In this case, the input image is input to the discrimination result output section 36 and the discrimination calculator 35 supplies the information indicating the area from which the target object is detected in the input image along with the calculation result thereof to the discrimination result output section 36. Then, the discrimination result output section 36 displays the frame surrounding the area from which the target object is detected along with the input image, when the target object is detected from the input image on the basis of the calculation result and the information indicating the area from the discrimination calculator 35.

In this way, the recognition apparatus 13 extracts the costume feature points from the input image, calculates the costume feature quantities of the pairs of costume feature points, extracts the outline feature points from the input image, and calculates the outline feature quantities. The recognition apparatus 13 detects a target object from the input image using the calculated costume feature quantities and outline feature quantities and the combined discriminator recorded in the discriminator recorder 12.

In this way, by detecting the target object from the input image using the costume feature quantities and the outline feature quantities, it is possible to reliably detect a target object from an image. That is, when at least one of the costume feature quantities and the outline feature quantities can be satisfactorily extracted from the input image, it is possible to satisfactorily detect the target object from the input image.

Although it has been described that a person is detected as the target object, the target object is not limited to the person, but may be any object as long as the surface pattern of the object is a pattern in which the same texture is repeated.

Although it has been described that the statistical learning process is performed on the basis of the discrete Adaboost algorithm, other boosting algorithms may be employed. For example, a gentle Adaboost algorithm may be employed. The discrete Adaboost algorithm and the gentle Adaboost algorithm are different from each other, in that the output result of the former discriminator is a discrete variate but the latter is a continuous variate. However, in the former, since the reliability is multiplied, the output result is treated as a continuous variate and thus there is not substantial difference.

Otherwise, the costume discriminator or the outline discriminator may be generated by performing the statistical learning process using the SVM (Support Vector Machine) or the Bayesian. In the statistical learning process, when the feature quantity (the costume feature quantity or the outline feature quantity) is selected by the Adaboost algorithm, it is possible to detect a person at a high speed by the use of the recognition apparatus 13 using the combined discriminator.

Although it has been described that the costume discriminator and the outline discriminator are generated and combined to generate the combined discriminator, the combined discriminator maybe generated directly from the costume feature quantities and the outline feature quantities without generating the costume discriminator and the outline discriminator.

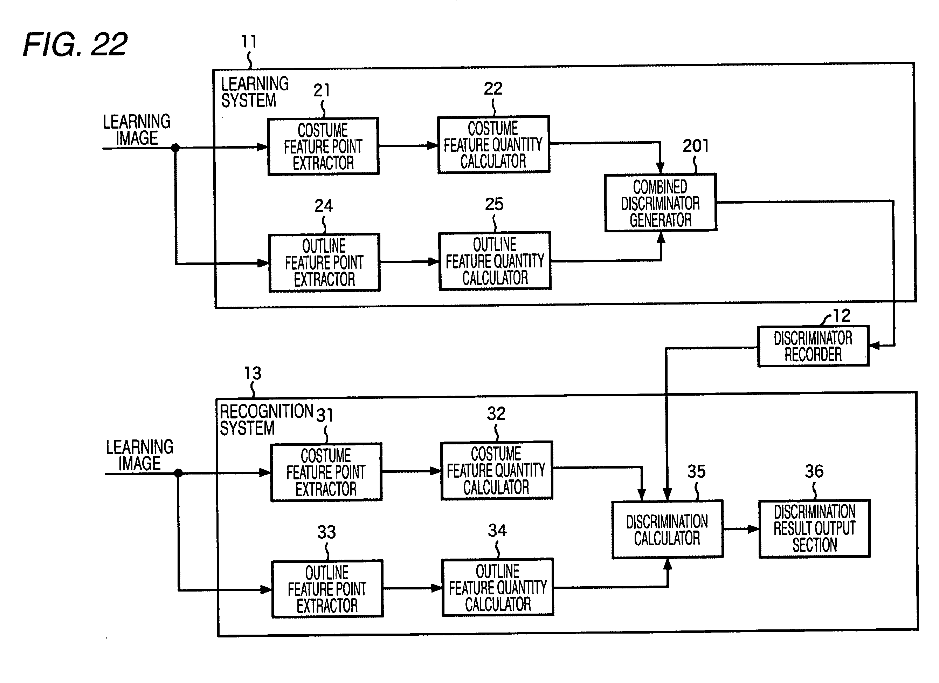

In this case, a person discriminating system is constructed as shown in Fig. 22. In Fig. 22, elements corresponding to those shown in Fig. 1 are denoted by like reference numerals and description thereof is omitted.

The person discriminating system shown in Fig. 22 is similar to the person recognition system shown in Fig. 1 in that the discriminator recorder 12 and the recognition apparatus 13 have the same configurations, but they are different from each other in the configuration of the learning apparatus 11.

That is, the learning apparatus 11 shown in Fig. 22 includes a costume feature point extractor 21, a costume feature quantity calculator 22, an outline feature point extractor 24, an outline feature quantity calculator 25, and a combined discriminator generator 201. The costume feature point extractor 21, the costume feature quantity calculator 22, the outline feature point extractor 24, and the outline feature quantity calculator 25 are equal to those of the learning apparatus 11 shown in Fig. 1 and description thereof is omitted.

The combined discriminator generator 201 performs a statistical learning process using the Adaboost algorithm on the basis of the costume feature quantity supplied from the costume feature quantity calculator 22 and the outline feature quantity supplied from the outline feature quantity calculator 25 to generate the combined discriminator. The combined discriminator generator 201 supplies and records the generated combined discriminator and the discriminating feature quantities to and in the discriminator recorder 12.

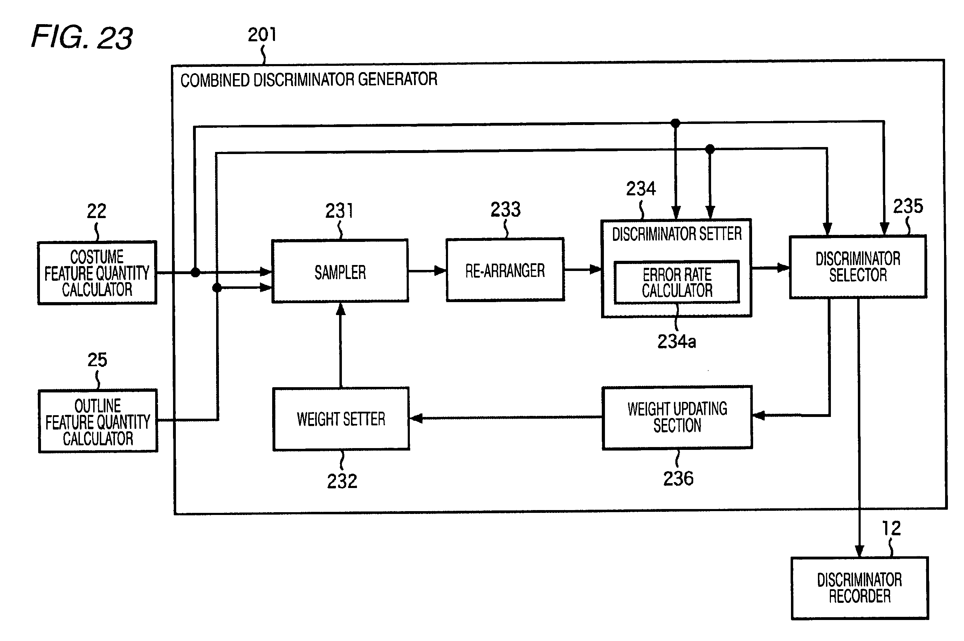

More specifically, the combined discriminator generator 201 is constructed, for example, as shown in Fig. 23. The combined discriminator generator 201 includes a sampler 231, a weight setter 232, a re-arranger 233, a discriminator setter 234, a discriminator selector 235, and a weight updating section 236.

The sampler 231 to the weight updating section 236 are similar to the sampler 101 to the weight updating section 106 shown in Fig. 10, except whether the feature quantity to be processed is the costume feature quantity or the outline feature quantity, and thus description thereof is properly omitted.

That is, the sampler 231 is supplied with the learning image and the costume feature quantity from the costume feature quantity calculator 22 and is supplied with the learning image and the outline feature quantity from the outline feature quantity calculator 25. The sampler 231 arranges the costume feature quantities and the outline feature quantities extracted from the same learning image to form one feature quantity, samples M feature quantities (costume feature quantities or outline feature quantities) of the costume feature quantities of the pairs of costume feature points or the outline feature quantities of the same outline feature points at the positions of the plural learning image every pair of costume feature points or every outline feature point depending on the weight of each learning image, and supplies the sampled M feature quantities to the re-arranger 233.

The discriminator setter 234 controls the error rate calculator 234a to calculate the error rate while changing the threshold value for each of the rearranged pairs of costume feature quantities of the costume feature points or the outline feature quantities of the outline feature points on the basis of the error information added to the learning image from the costume feature quantity calculator 22 and the outline feature quantity calculator 25, and sets the threshold value to minimize the error rate.

The discriminator selector 235 selects the weak discriminator minimizing the error rate from the weak discriminators, updates the combined discriminator including the stored weak discriminators, and supplies and records the final combined discriminator and the costume feature quantities or the outline feature quantities corresponding to the weak discriminators as the discriminating feature quantities to and in the discriminator recorder 12.

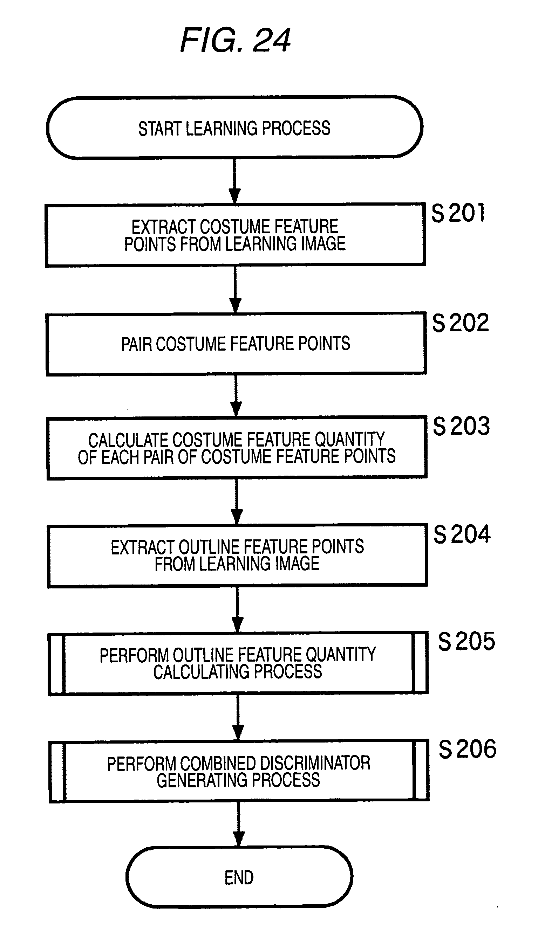

The learning process of the learning apparatus 11 shown in Fig. 22 will be described now with reference to the flowchart of Fig. 24. The processes of steps S201 to S203 are similar to the processes of steps S11 to S13 of Fig. 11 and thus description thereof is omitted.

When the costume feature quantities and the learning image are supplied to the combined discriminator generator 201 from the costume feature quantity calculator 22 in step S203, the outline feature point extractor 24 performs the same process as step S15 of Fig. 11 in step S204 to extract the outline feature points from the input learning image and supplies the outline feature points and the learning image to the outline feature quantity calculator 25.

In step S205, the outline feature quantity calculator 25 performs the outline feature quantity calculating process on the basis of the outline feature points and the learning image from the outline feature point extractor 24 to calculate the outline feature quantities of the outline feature points. The outline feature quantity calculating process is similar to the process of step S16 of Fig. 11 and description thereof is omitted.

When the outline feature quantity calculating process is performed and the outline feature quantities and the learning image are supplied to the combined discriminator generator 201 from the outline feature quantity calculator 25, the combined discriminator generator 201 performs the combined discriminator generating process to generate the combined discriminator in step S206 on the basis of the learning image and the costume feature quantities supplied from the costume feature quantity calculator 22 and the learning image and the outline feature quantities supplied from the outline feature quantity calculator 25. The combined discriminator generating process is similar to the costume discriminator generating process described with reference to Fig. 14 and thus description thereof is omitted.

In the combined discriminator generating process of step S206, one feature quantity including the costume feature quantity and the outline feature quantity is used to perform the combined discriminator generating process using an early fusion method. Accordingly, the feature quantity belonging to the group $Gr_k$ (k satisfies $1 \leq k \leq N1+N2$, where the number of costume feature quantities is N1 and the number of outline feature quantities is N2) shown in Fig. 15 is one of the costume feature quantity and the outline feature quantity.

The weak discriminator $f_{jk}$ minimizing the selected error rate $e_{jk}$ among the N1+N2 weak discriminators $f_{jk}$ set every group $Gr_k$ is one of the weak discriminator of the pairs of the costume feature points and the weak discriminator of the outline feature points. That is, depending on which the weak discriminator minimizing the error is among the weak discriminators of the pairs of costume feature points or the weak discriminators of the outline feature points, it is determined whether the weak discriminator added to the combined discriminator among the weak discriminators of the combined discriminator is the weak discriminator of the pair of the costume feature points or the weak discriminator of the outline feature point.

In this way, when the combined discriminator is generated directly from the costume feature quantities and the outline feature quantities, the combined discriminator is generated by linearly combining the weak discriminators of the pairs of costume feature points and the weak discriminators of the outline feature points. The combined discriminator is a function of outing "+1" indicating that the target object exists in the image when the sum of the weak discriminators substituted with the feature quantities is positive and outputting "-1" indicating that the target object does not exist in the image when the sum of the weak discriminators is negative. That is, two strong discriminators are not independently learned, but one strong discriminator is learned using two weak feature quantities.

When the combined discriminator is generated by the combined discriminator generator 201, the generated combined discriminator and the discriminating feature quantity are supplied and recorded to and in the discriminator recorder 12, whereby the learning process is finished.

In this way, the learning apparatus 11 generates one combined discriminator directly from the costume feature quantity and the outline feature quantity by the learning process. By generating the combined discriminator from the costume feature quantity and the outline feature quantity, it is possible to provide a discriminator that can reliably detect a person from an image.

When the recognition apparatus 13 detects the target object from the input image using the combined discriminator generated by the learning apparatus 11 shown in Fig. 22, the discrimination calculator 35 makes a calculation by substituting the combined discriminator with the feature quantity corresponding to the discriminating feature quantity recorded in the discriminator recorder 12 among the costume feature quantity from the costume feature quantity calculator 32 and the outline feature quantities from the outline feature quantity calculator 34. This process is similar to the person detecting process described with reference to Fig. 20, except for the discriminating feature quantity, and thus description thereof is omitted.

The above-mentioned series of processes may be performed by hardware or by software. When the series of processes are performed by software, programs constituting the software are installed in a computer mounted with an exclusive hardware or a general-purpose personal computer, which can perform various functions by installing various programs therein, from a program recording medium.

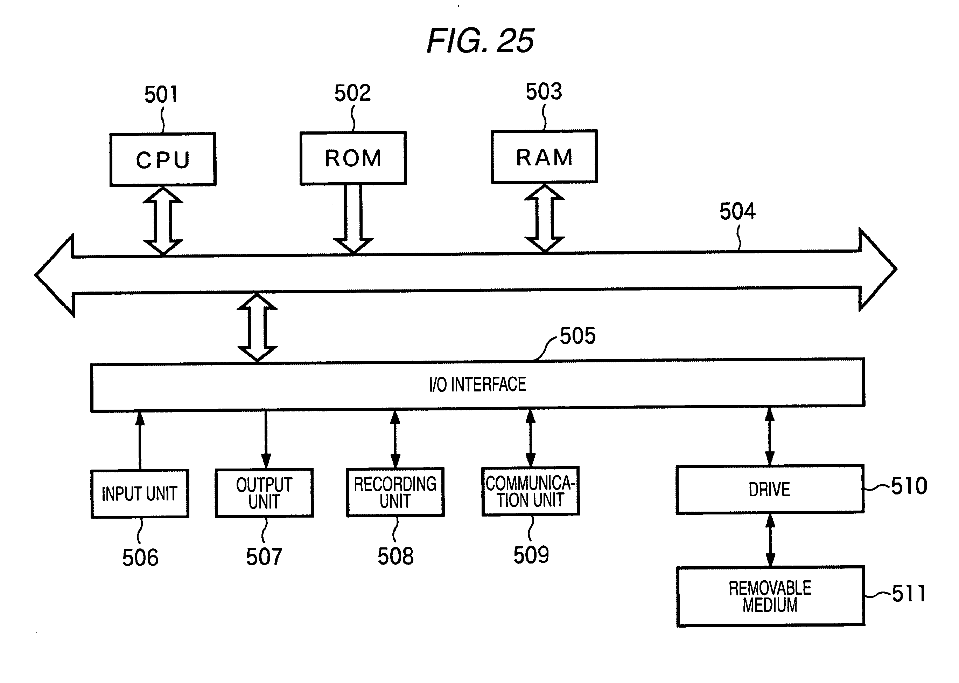

Fig. 25 is a block diagram illustrating a hardware configuration of a computer performing the series of processes by the use of programs.

In the computer, a CPU (Central Processing Unit) 501, a ROM (Read Only Memory) 502, and a RAM (Random Access Memory) 503 are connected to each other through a bus 504.

An input/output interface 505 is connected to the bus 504. The input/output interface 505 is connected to an input unit 506 including a keyboard, a mouse, and a microphone, an output unit 507 including a display and a speaker, a recording unit 508 including a hard disc or a non-volatile memory, a communication unit 509 including a network interface, and a driver 510 driving a removable medium 511 such as a magnetic disc, an optical disc, a magnetooptical disc, or a semiconductor memory.

Inthecomputerhavingtheabove-mentionedconfiguration, the CPU 501 loads, for example, a program recorded in the recording unit 508 to the RAM 503 through the input/output interface 505 and the bus 504 and executes the program, thereby performing the series of processes.

The program executed by the computer (CPU 501) is recorded in the removable medium 511 as a package medium including a magnetic disc (including flexible disc) , an optical disc (CD-ROM (Compact Disc-ReadOnlyMemory) , a DVD (Digital Versatile Disc) , a magnetooptical disc, or a semiconductor memory, or provided through a wired or wireless transmission medium such as a local area network, the Internet, or a digital satellite broadcast.

The program can be installed in the recording unit 508 through the input/output interface 505 by loading the removable medium 511 to the drive 510. The program may be received by the communication unit 509 through the wired or wireless transmission medium and installed in the recording unit 508. The program may be installed in advance in the ROM 502 or the recording unit 508.

The program executed by the computer may be a program executed in time series in the order described herein, or may be a program executed in parallel or at the necessary timing such as at the time of calling.

The invention is not limited to the above-mentioned embodiments, but may be modified in various forms within the scope of the appended claims or the equivalents thereof.

**Claims**

1.  A learning apparatus comprising:

    first feature quantity calculating means for pairing a predetermined pixel and a different pixel in each of a plurality of learning images, which includes a learning image containing a target object to be recognized and a learning image not containing the target object, and calculating a first feature quantity of the pair by calculating a texture distance between an area including the predetermined pixel and an area including the different pixel; and
    first discriminator generating means for generating a first discriminator for detecting the target object from an image by a statistical learning using a plurality of the first feature quantities.

2.  The learning apparatus according to claim 1, further comprising:

    second feature quantity calculating means for making a calculation of extracting an outline from each of the plurality of learning images and generating a second feature quantity from the calculation result;
    second discriminator generating means for generating a second discriminator for detecting the target object from the image by a statistical learning using a plurality of the second feature quantities; and
    third discriminator generating means for combining the first discriminator and the second discriminator to generate a third discriminator for detecting the target object from the image.

3.  The learning apparatus according to claim 2, wherein the third discriminator generating means generates the third discriminator by linearly combining the first discriminator and the second discriminator.

4.  The learning apparatus according to any one of the preceding claims, further comprising second feature quantity calculating means for making a calculation of extracting an outline from each of the plurality of learning images and generating a second feature quantity from the calculation result,
    wherein the first discriminator generating means generates the first discriminator by a statistical learning using the plurality of first feature quantities and the plurality of second feature quantities.

5.  A learning method comprising the steps of:

    pairing a predetermined pixel and a different pixel in each of a plurality of learning images, which includes a learning image containing a target object to be recognized and a learning image not containing the target object, and calculating a feature quantity of the pair by calculating a texture distance between an area including the predetermined pixel and an area including the different pixel; and
    generating a discriminator for detecting the target object from an image by a statistical learning using a plurality of the feature quantities.

6.  A recognition apparatus comprising:

    first feature quantity calculating means for pairing a predetermined pixel and a different pixel in an input image and calculating a first feature quantity of the pair by calculating a texture distance between an area including the predetermined pixel and an area including the different pixel; and
    detection means for detecting a target object from the input image, on the basis of the first feature quantity calculated by the first feature quantity calculating means, by the use of a first discriminator generated by statistical learning using a plurality of the first feature quantities obtained from a learning image including the target object to be recognized and a learning image not including the target object.

7.  The recognition apparatus according to claim 6, further comprising second feature quantity calculating means for making a calculation of extracting an outline from the input image to generate a second feature quantity from the calculation result,
    wherein the detection means detects the target object from the input image on the basis of the first feature quantity calculated by the first feature quantity calculating means and the second feature quantity calculated by the second feature quantity calculating means, by the use of a third discriminator obtained by combining the first discriminator with a second discriminator generated by statistical learning using a plurality of the second feature quantities, which are obtained from the learning image including the target object to be recognized and the learning image not including the target object.

8. The recognition apparatus according to claim 6 or 7, further comprising second feature quantity calculating means for making a calculation of extracting an outline from the input image to generate a second feature quantity from the calculation result,
   wherein the detection means detects the target object from the input image on the basis of the first feature quantity calculated by the first feature quantity calculating means and the second feature quantity calculated by the second feature quantity calculatingmeans, by the use of the first discriminator generated by statistical learning using the plurality of first feature quantities and the plurality of the second feature quantities, which are obtained from the learning image including the target object to be recognized and the learning image not including the target object.

9. A recognition method comprising the steps of:

   pairing a predetermined pixel and a different pixel in an input image and calculating a feature quantity of the pair by calculating a texture distance between an area including the predetermined pixel and an area including the different pixel; and
   detecting a target object from the input image on the basis of the feature quantity calculated in the step of calculating the feature quantity by the use of a discriminator generated by statistical learning using a plurality of the feature quantities obtained from a learning image including the target object to be recognized and a learning image not including the target object.

10. A computer program capable on execution by a computer of causing the computer to perform a method according to claim 5 or 9.

*FIG. 1*

EP 2 068 271 A2

*FIG. 2*

25

OUTLINE FEATURE QUANTITY CALCULATOR

LEARNING
IMAGE

OUTLINE
FEATURE
POINT

61

FIRST FILTERING
PROCESSOR

62

SECOND
FILTERING
PROCESSOR

63

THIRD
FILTERING
PROCESSOR

64

FEATURE
QUANTITY
GENERATOR

# FIG. 3

G1-0:sigma=2    G1-90:sigma=2

G2-0:sigma=2    G2-60:sigma=2    G2-120:sigma=2    Laplacian:sigma=2

G3-0:sigma=2    G3-45:sigma=2    G3-90:sigma=2    G3-135:sigma=2

LINEAR
DIFFERENTIAL

QUADRATIC
DIFFERENTIAL

CUBIC
DIFFERENTIAL

*FIG. 4*

1st Derivative of Gaussian

2nd Derivative of Gaussian

3rd Derivative of Gaussian

## FIG. 5

1st Derivative of Gaussian

2nd Derivative of Gaussian

3rd Derivative of Gaussian

EP 2 068 271 A2

# FIG. 6

1st Derivative of Gaussian

2nd Derivative of Gaussian

3rd Derivative of Gaussian

# FIG. 7

DIRECTION  0°  1/8 pi  2/8 pi  3/8 pi  4/8 pi  5/8 pi  6/8 pi  7/8 pi

1st Derivative of Gaussian

average image

2nd Derivative of Gaussian

3rd Derivative of Gaussian

EP 2 068 271 A2

EP 2 068 271 A2

# FIG. 8

DIRECTION   0°   1/8 pi   2/8 pi   3/8 pi   4/8 pi   5/8 pi   6/8 pi   7/8 pi

1st Derivative of Gaussian

average image

2nd Derivative of Gaussian

3rd Derivative of Gaussian

## FIG. 9

DIRECTION   0°   1/8 pi   2/8 pi   3/8 pi   4/8 pi   5/8 pi   6/8 pi   7/8 pi

average image

1st Derivative of Gaussian

2nd Derivative of Gaussian

3rd Derivative of Gaussian

EP 2 068 271 A2

FIG. 10

# FIG. 11

```
        START LEARNING PROCESS

                    ↓

   EXTRACT COSTUME FEATURE POINTS          S11
        FROM LEARNING IMAGE

                    ↓

     PAIR COSTUME FEATURE POINTS           S12

                    ↓

 CALCULATE COSTUME FEATURE QUANTITY OF     S13
   EACH PAIR OF COSTUME FEATURE POINTS

                    ↓

     PERFORM COSTUME DISCRIMINATOR         S14
          GENERATING PROCESS

                    ↓

    EXTRACT OUTLINE FEATURE POINTS         S15
        FROM LEARNING IMAGE

                    ↓

   PERFORM OUTLINE FEATURE QUANTITY        S16
          CALCULATING PROCESS

                    ↓

     PERFORM OUTLINE DISCRIMINATOR         S17
          GENERATING PROCESS

                    ↓

 COMBINE COSTUME DISCRIMINATOR AND         S18
 OUTLINE DISCRIMINATOR TO GENERATE
      COMBINED DISCRIMINATOR

                    ↓

                  END
```

# FIG. 12

# FIG. 13

AREA SIMILARITY VALUE
OF CERTAIN PAIR

$PI_1$ $PI_2$ $PI_3$ $PI_4$ $PI_5$ · · · · · · $PI_M$

NUMBER OF PAIRS

LABEL +1 +1 +1 +1 +1 +1 -1 -1 -1 -1 -1 -1 -1 -1 -1 -1

EP 2 068 271 A2

*FIG. 14*

START COSTUME DISCRIMINATOR
GENERATING PROCESS

INITIALIZE WEIGHT Wi, COUNTER j, AND COSTUME
DISCRIMINATOR R(x) OF EACH LEARNING IMAGE
TO 1/M, 1, AND 0, RESPECTIVELY  **S51**

SELECT M COSTUME FEATURE QUANTITIES
DEPENDING ON WEIGHTS Wi EVERY PAIR OF
COSTUME FEATURE POINTS  **S52**

REARRANGE M COSTUME FEATURE
QUANTITIES EVERY PAIR k  **S53**

SET WEAK DISCRIMINATORS Fjk INCLUDING
THRESHOLD VALUES thjk TO MINIMIZE ERROR
RATE ejk OF EACH PAIR k  **S54**

SELECT WEAK DISCRIMINATORS fjk
MINIMIZING ERROR RATE ejk  **S55**

CALCULATE RELIABILITY cj  **S56**

NORMALIZE AND UPDATE WEIGHT Wi  **S57**

UPDATE COSTUME DISCRIMINATOR R(x)  **S58**

STORE COSTUME FEATURE QUANTITIES OF PAIR k
CORRESPONDING TO WEAK DISCRIMINATOR fjk
MINIMIZING ERROR RATE ejk  **S59**

IS j EQUAL TO OR MORE THAN L?  **S60**

No

INCREASE j  **S61**

Yes

OUTPUT COSTUME DISCRIMINATOR  **S62**

RETURN

34

## FIG. 15

|        |        | Gr1 | Gr2 | Gr3 | | GrN |
|--------|--------|-----|-----|-----|---|-----|
| (+1)   | PI1    | ( A1 , | A2 , | A3 | ········ | AN ) |
| (+1)   | PI2    | ( B1 , | B2 , | B3 | ········ | BN ) |
| (-1)   | PI3    | ( C1 , | C2 , | C3 | ········ | CN ) |
| ⋮      | ⋮      | ⋮   | ⋮   | ⋮   | | ⋮   |
| (-1)   | PIM    | ( M1 , | M2 , | M3 | ········ | MN ) |
|        |        | ↓   | ↓   | ↓   | | ↓   |
|        |        | e1  | e2  | e3  | | eN  |

## FIG. 16

$$-1 \qquad \text{---th11} \qquad +1$$

L1 , (A1) | (C1) B1 ········ (M1)

Value

# FIG. 17

FIG. 18A

FIG. 18B

## FIG. 19

START OUTLINE FEATURE QUANTITY
CALCULATING PROCESS

S101
SELECT NON-PROCESSED OUTLINE
FEATURE POINT AS NOTED PIXEL

S102
SET q=1

S103
SET p=1

S104
PERFORM FIRST FILTERING PROCESS

S108
INCREASE p

S105
PERFORM SECOND FILTERING PROCESS

S110
INCREASE q

S106
PERFORM THIRD FILTERING PROCESS

S107
$\sigma p = \sigma 3$?  No

Yes  S109
$\theta q = \theta 4$?  No

Yes  S111
GENERATE OUTLINE FEATURE QUANTITY

S112
ARE ALL OUTLINE FEATURE
POINTS PROCESSED?  No

Yes

RETURN

# FIG. 20

START PERSON DETECTING PROCESS

EXTRACT COSTUME FEATURE
POINTS FROM INPUT IMAGE — S151

PAIR COSTUME FEATURE POINTS — S152

CALCULATE COSTUME FEATURE QUANTITY OF
EACH PAIR OF COSTUME FEATURE POINTS — S153

EXTRACT OUTLINE FEATURE
POINTS FROM INPUT IMAGE — S154

PERFORM OUTLINE FEATURE
QUANTITY CALCULATING PROCESS — S155

READ COMBINED DISCRIMINATOR AND
SUBSTITUTE COMBINED DISCRIMINATOR
WITH FEATURE QUANTITY FOR CALCULATION — S156

OUTPUT PERSON DETECTION RESULT ON
THE BASIS OF CALCULATION RESULT — S157

END

## FIG. 21

EP 2 068 271 A2

## FIG. 22

**11 — LEARNING SYSTEM**

LEARNING IMAGE →

21 COSTUME FEATURE POINT EXTRACTOR → 22 COSTUME FEATURE QUANTITY CALCULATOR →

24 OUTLINE FEATURE POINT EXTRACTOR → 25 OUTLINE FEATURE QUANTITY CALCULATOR →

201 COMBINED DISCRIMINATOR GENERATOR →

**12 — DISCRIMINATOR RECORDER**

**13 — RECOGNITION SYSTEM**

LEARNING IMAGE →

31 COSTUME FEATURE POINT EXTRACTOR → 32 COSTUME FEATURE QUANTITY CALCULATOR →

33 OUTLINE FEATURE POINT EXTRACTOR → 34 OUTLINE FEATURE QUANTITY CALCULATOR →

35 DISCRIMINATION CALCULATOR → 36 DISCRIMINATION RESULT OUTPUT SECTION

## FIG. 23

COMBINED DISCRIMINATOR GENERATOR — 201

22 — COSTUME FEATURE QUANTITY CALCULATOR

25 — OUTLINE FEATURE QUANTITY CALCULATOR

231 — SAMPLER

233 — RE-ARRANGER

234 — DISCRIMINATOR SETTER
234a — ERROR RATE CALCULATOR

235 — DISCRIMINATOR SELECTOR

232 — WEIGHT SETTER

236 — WEIGHT UPDATING SECTION

12 — DISCRIMINATOR RECORDER

EP 2 068 271 A2

# FIG. 24

START LEARNING PROCESS

↓

EXTRACT COSTUME FEATURE
POINTS FROM LEARNING IMAGE — S201

↓

PAIR COSTUME FEATURE POINTS — S202

↓

CALCULATE COSTUME FEATURE QUANTITY
OF EACH PAIR OF COSTUME FEATURE POINTS — S203

↓

EXTRACT OUTLINE FEATURE POINTS
FROM LEARNING IMAGE — S204

↓

PERFORM OUTLINE FEATURE QUANTITY
CALCULATING PROCESS — S205

↓

PERFORM COMBINED DISCRIMINATOR
GENERATING PROCESS — S206

↓

END

## FIG. 25

EP 2 068 271 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007316636 A

### Non-patent literature cited in the description

- **PAPAGEORGIOU, C. ; M. OREN ; T. POGGIO.** A General Framework for Object Detection. *Proceedings of the Sixth International Conference on Computer Vision (ICCV'98),* January 1998, 555-562
- **K. MIKOLAJCZYK ; C. SCHMID ; A. ZISSERMAN.** Human detection based on a probabilistic assembly of robust part detectors. *Proc. ECCV,* 2004, vol. 1, 69.81
- **NAVNEET DALAL ; BILL TRIGGS.** Histograms of Oriented Gradients for Human Detection. *CVPR2005*
- **B. WU ; R. NEVATIA.** Detection of multiple, partially occluded humans in a single image by bayesian combination of edgelet part detectors. *Proc. 10th Int. Conf. Computer Vision,* 2005
- **PAYAM SABZMEYDANI ; GREG MORI.** Detecting Pedestrians by Learning Shapelet Features. *CVPR2007*
- **S. MUNDER ; D. GAVRILLA.** *An Experimental Study on Pedestrian Classification*